# EUROPEAN PATENT APPLICATION

(11) **EP 4 585 388 A1**
(43) Date of publication of application: **16.07.2025**
(21) Application number: 23888374.8
(22) Date of filing: 26.09.2023
(51) Int. Cl.: B29C 45/14, B29C 45/26, B29C 45/37, B29C 45/40, B29C 33/12, B29C 33/44

(54) **METHOD FOR PRODUCING RESIN MOLDED ARTICLE, RESIN MOLDED ARTICLE, AND DIE FOR INSERT MOLDING**

(30) Priority: 09.11.2022 JP 2022179311; 19.04.2023 JP 2023068312
(71) Applicant: NISSHA CO., LTD., Kyoto-shi, Kyoto 604-8551 (JP)
(72) Inventor: KAWASHIMA, Eiji, Kyoto-shi, Kyoto 604-8551 (JP); SAKAMOTO, Shunsuke, Kyoto-shi, Kyoto 604-8551 (JP); MATSUMOTO, Yuki, Kyoto-shi, Kyoto 604-8551 (JP)
(74) Representative: Isarpatent
(86) International application number: PCT/JP2023/034988
(87) International publication number: WO 2024/101021

(57) **Abstract**

Provided is an insert molding method in which an embedded portion formed continuously to an exposed portion is sufficiently supported by resin of a resin molded body itself and the embedded portion is easily sufficiently sealed. A sliding pin 130 is slid in synchronization with clamping of a first mold 110 and a second mold 120, and is deformed so as to wrap an exposed portion 50 with an embedded portion 40 of an insert member exposed to a molding space. The sliding pin 130 forms a third surface of a wall surface of the molding space at a boundary between the embedded portion 40 and the exposed portion 50. The embedded portion 40 is located in molten resin, and the molten resin is injected until the molten resin comes into contact with the third surface and is solidified. The sliding pin 130 is slid and is deformed so as to release the exposed portion 50 wrapped with the sliding pin 130.

## Description

### TECHNICAL FIELD

The present invention relates to a method for manufacturing a resin molded article, the resin molded article manufactured by the manufacturing method, and a mold for insert molding, which is used in the manufacturing method.

### BACKGROUND ART

It has been conventionally performed to manufacture a resin molded article in which an insert member and a resin molded body are integrated, by setting the insert member in a mold and filling the periphery of the insert member with molten resin. For example, Patent Literature 1 (Japanese Patent No. 5546696) discloses a technique of exposing, from molded resin, a contact pin electrically connected to an electrode pattern of a base film inserted into an injection-molded article by insert molding.

### CITATION LIST

### PATENT LITERATURE

Patent Document 1 : Japanese Patent No. 5546696

### SUMMARY OF INVENTION

### PROBLEMS TO BE SOLVED BY INVENTION

Although a rod-shaped insert member such as the contact pin described in Patent literature 1 is exposed from the resin molded body, it is difficult to expose a member having a complicated shape, such as a connector, to the outside of the resin molded body by insert molding.

Therefore, conventionally, a manufacturing method is often used, in which a through-hole penetrating the resin molded body to the insert member for electrical connection is provided in the resin molded body after insert molding, and is filled with a sealing material after the electrical connection of the connector has been made using the through-hole.

However, when the through-hole is filled with the sealing material or the like after the electrical connection of, for example, the connector has been made using the through-hole, not only it takes time and effort, but also moisture or the like may enter, for example, a connection portion and a failure or the like may occur if sealing with the sealing material is not sufficient.

An object of the present invention is to provide an insert molding method for exposing part of an insert member to the outside of a resin molded body, in which an embedded portion formed continuously to an exposed portion is sufficiently supported by resin of the resin molded body itself and the embedded portion is easily sufficiently sealed.

### SOLUTION TO PROBLEMS

Hereinafter, a plurality of aspects will be described as means for solving the problems. These aspects can be arbitrarily combined as necessary.

A method for manufacturing a resin molded article according to one aspect of the present invention is a method for manufacturing a resin molded article, the resin molded article being formed by integrating a resin molded body and an insert member by insert molding, the insert member having a main body portion inserted into the resin molded body, an embedded portion protruding from the main body portion and embedded in the resin molded body, and an exposed portion extending from the embedded portion and exposed to the outside of the resin molded body. The method for manufacturing the resin molded article includes a first step of setting the insert member between a first mold and a second mold, a second step of forming a molding space housing the insert member by clamping the first mold and the second mold, a third step of molding the resin molded body into which the insert member is inserted by injecting molten resin into the molding space and solidifying the molten resin, and a fourth step of taking out the resin molded body by opening the first mold and the second mold. A wall surface of the molding space includes a first surface of the first mold and a second surface of the second mold. In the second step, a sliding pin is slid in synchronization with the clamping of the first mold and the second mold, is changed so as to wrap the exposed portion with the embedded portion of the insert member exposed to the molding space, and forms a third surface of the wall surface of the molding space at a boundary between the embedded portion and the exposed portion. In the third step, the embedded portion is located in the molten resin, and the molten resin is injected until the molten resin comes into contact with the third surface and is solidified. In the fourth step, the sliding pin is slid and is changed so as to release the exposed portion wrapped with the sliding pin.

In the method for manufacturing the resin molded article, which is configured as described above, since the sliding pin changes so as to wrap the exposed portion, even if the shape of the exposed portion is complicated, it is possible to easily manufacture the resin molded article having the insert member in which the exposed portion is exposed to the outside of the resin molded body and the embedded portion is embedded in the resin molded body. In the resin molded article manufactured in this manner, the embedded portion is firmly supported by the resin molded body, and the periphery of the boundary between the embedded portion and the main body portion is sealed by the resin molded body.

In the method for manufacturing the resin molded article as described above, in the second step, the exposed portion may be housed in a housing portion of the sliding pin in an open state in synchronization with the clamping, and the housing portion may be deformed into a closed state to wrap the exposed portion and form the third surface, in the third step, the molten resin may not flow into the housing portion, and in the fourth step, the housing portion in the closed state may be deformed into the open state to take out the exposed portion from the housing portion. In the method for manufacturing the resin molded article, which is configured as described above, by deforming the housing portion from the open state to the closed state in synchronization with the clamping, the sliding pin can be changed using the clamping, and manufacturing steps and device can be simplified.

In the method for manufacturing the resin molded article as described above, the housing portion of the sliding pin may include a plurality of divided pieces, and the plurality of divided pieces may be deformed into the closed state by sliding and being combined when the exposed portion is housed in the housing portion in the second step, and be deformed into the open state by being separated when the exposed portion is taken out of the housing portion in the fourth step. In the method for manufacturing the resin molded article, which is configured as described above, since the housing portion includes the plurality of divided pieces, it is easy to form the housing portion according to the shape of the exposed portion.

In the method for manufacturing the resin molded article as described above, the plurality of divided pieces may slide in a direction away from the resin molded body when separated. In the method for manufacturing the resin molded article, which is configured as described above, it is possible to reduce the influence of the sliding pin on the resin molded article during sliding.

In the method for manufacturing the resin molded article as described above, the exposed portion has, on the outer peripheral surface thereof, a dam portion protruding in an annular shape to dam the molten resin, and the housing portion has an annular groove in which the exposed portion is movable in a direction intersecting a sliding direction and which is annularly contactable with the dam portion. In the method for manufacturing the resin molded article, which is configured as described above, the tolerance for the dimensional error of the insert member can be increased.

A resin molded article according to one aspect of the present invention includes a resin molded body made of thermoplastic resin, and an insert member inserted into the resin molded body by insert molding. The insert member includes a main body portion inserted into the resin molded body, an embedded portion protruding from the main body portion and embedded in the resin molded body, and an exposed portion extending from the embedded portion and exposed to the outside of the resin molded body. The exposed portion includes an outer peripheral surface exposed from the resin molded body and a protrusion protruding from the outer peripheral surface.

In the resin molded article described above, the exposed portion can be formed in a complicated shape because of the protrusion protruding from the outer peripheral surface of the exposed portion of the insert member, and for example, a connector having a complicated shape can be formed. The resin molded article described above can be configured to have, on the outer peripheral surface, a dam portion protruding in an annular shape and contacting the resin molded body.

In the resin molded article described above, the main body portion includes a film substrate having an electric circuit. The exposed portion is provided in a connector or a connection terminal electrically connected to the electric circuit. In the resin molded article configured as described above, the connector or the connection terminal can be firmly supported by the resin molded body, and the electrical connection between the electric circuit and the connector or the connection terminal can be protected by the resin molded body.

A mold for insert molding according to one aspect of the present invention is a mold for insert molding for manufacturing a resin molded article, the resin molded article being formed by integrating a resin molded body and an insert member by insert molding, the insert member having a main body portion inserted into the resin molded body, an embedded portion protruding from the main body portion and embedded in the resin molded body, and an exposed portion extending from the embedded portion and exposed to the outside of the resin molded body. The mold includes a first mold having a first surface and a second mold having a second surface for forming a wall surface of a molding space for molding the resin molded body, and a sliding pin having a third surface for forming the wall surface of the molding space. The sliding pin has a housing portion housing the exposed portion. The housing portion changes from an open state to a closed state upon clamping to house the exposed portion, and changes from the closed state to the open state upon mold opening to take out the exposed portion.

The mold for insert molding, which is configured as described above, can be applied even when the shape of the exposed portion exposed to the outside of the resin molded body is complicated.

### EFFECTS OF INVENTION

According to the method for manufacturing the resin molded article, the resin molded article, and the mold for insert molding according to the present invention, in the resin molded article including the insert member having the exposed portion exposed to the outside of the resin molded body, the embedded portion formed continuously to the exposed portion can be sufficiently supported by the resin of the resin molded body itself, and the embedded portion can be sufficiently sealed.

### BRIEF DESCRIPTION OF DRAWINGS

Fig. 1 is a perspective view of a resin molded article according to an embodiment.
Fig. 2 is a sectional view of the resin molded article taken along line I-I in Fig. 1.
Fig. 3 is a flowchart showing the outline of a method for manufacturing the resin molded article according to the embodiment.
Fig. 4 is a sectional view showing a state in the middle of clamping in the manufacturing of the resin molded article according to a first embodiment.
Fig. 5 is a partially enlarged perspective view of the periphery of divided pieces shown in Fig. 4.
Fig. 6 is a sectional view showing a clamped state in the manufacturing of the resin molded article according to the first embodiment.
Fig. 7 is a perspective view of a sliding pin according to the first embodiment.
Fig. 8 is an exploded perspective view of the sliding pin according to the first embodiment.
Fig. 9 is an exploded sectional view of the sliding pin according to the first embodiment.
Fig. 10 is an enlarged sectional view of the periphery of the divided pieces shown in Fig. 4.
Fig. 11 is a block diagram for describing a controller according to the first embodiment.
Fig. 12 is a partially broken perspective view showing a state upon removal in manufacturing of a resin molded article according to a second embodiment.
Fig. 13 is a sectional view showing a state in the middle of clamping in the manufacturing of the resin molded article according to the second embodiment.
Fig. 14 is a sectional view showing a clamped state in the manufacturing of the resin molded article according to the second embodiment.
Fig. 15 is a sectional view showing a removed state in the manufacturing of the resin molded article according to the second embodiment.
Fig. 16 is a front view of a sliding pin wrapping a connector according to a third embodiment.
Fig. 17 is a partially enlarged perspective view of the connector and the sliding pin in Fig. 16.
Fig. 18 is an exploded perspective view of the sliding pin according to the third embodiment.
Fig. 19 is a perspective view of the connector according to the third embodiment.
Fig. 20 is a partially enlarged sectional view of the connector and the sliding pin in Fig. 16.
Fig. 21 is a front view of a resin molded article and a sliding pin according to a fourth embodiment.
Fig. 22 is an exploded sectional view of the sliding pin according to the fourth embodiment.
Fig. 23 is an enlarged sectional view of divided pieces according to the fourth embodiment.
Fig. 24 is a partially enlarged sectional view of the resin molded article and the sliding pin in Fig. 21.
Fig. 25 is a sectional view showing a state in the middle of clamping in manufacturing of a resin molded article according to a fifth embodiment.
Fig. 26 is a partially enlarged perspective view of the periphery of divided pieces shown in Fig. 25.
Fig. 27 is a perspective view of a sliding pin according to the fifth embodiment.
Fig. 28 is a front view of the sliding pin according to the fifth embodiment.
Fig. 29 is a plan view of the sliding pin according to the fifth embodiment.
Fig. 30 is a partially enlarged sectional view of the sliding pin according to the fifth embodiment.
Fig. 31 is a partially enlarged sectional view of the periphery of the divided pieces of the first or second embodiment.
Fig. 32 is a partially enlarged sectional view of the periphery of divided pieces of Modification C.
Fig. 33 is a front view of a sliding pin of Modification D.
Fig. 34 is a perspective view of the sliding pin of Modification D.
Fig. 35 is a perspective view of a connector according to Modification E.
Fig. 36 is a front view of a sliding pin and an insert member in a state in which divided pieces according to a sixth embodiment are opened.
Fig. 37 is a perspective view of the sliding pin and the insert member in a state in which one of the divided pieces of Fig. 36 is omitted.
Fig. 38 is a perspective view showing the sliding pin and the insert member with the divided piece on the side different from that of Fig. 37 omitted in a state in which the insert member is housed in the sliding pin.
Fig. 39A is a perspective view of a resin molded article according to the sixth embodiment.
Fig. 39B is a perspective view of the resin molded article according to the third embodiment.
Fig. 40 is a perspective view of a sliding pin and an insert member in a state in which one of divided pieces according to Modification G is omitted.
Fig. 41 is a front view of a sliding pin and an insert member in a state in which divided pieces according to a seventh embodiment are opened.
Fig. 42 is a perspective view of the sliding pin and the insert member in a state in which one of the divided pieces of Fig. 41 is omitted.
Fig. 43 is a perspective view showing the sliding pin and the insert member with the divided piece on the side different from that of Fig. 42 omitted in a state in which the insert member is housed in the sliding pin.
Fig. 44 is a sectional view of a resin molded article according to the seventh embodiment.
Fig. 45 is a perspective view of a sliding pin and an insert member in a state in which one of divided pieces according to Modification I is omitted.

### DESCRIPTION OF EMBODIMENTS

### <First Embodiment>

### (1) Configuration of Resin Molded Article

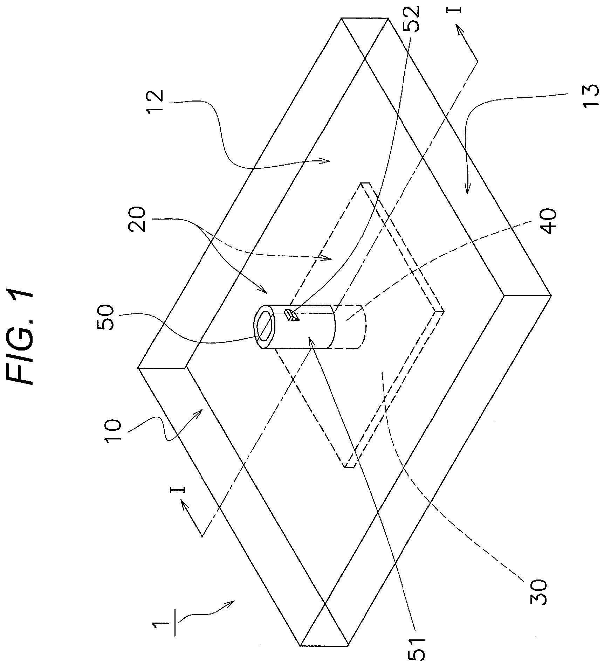

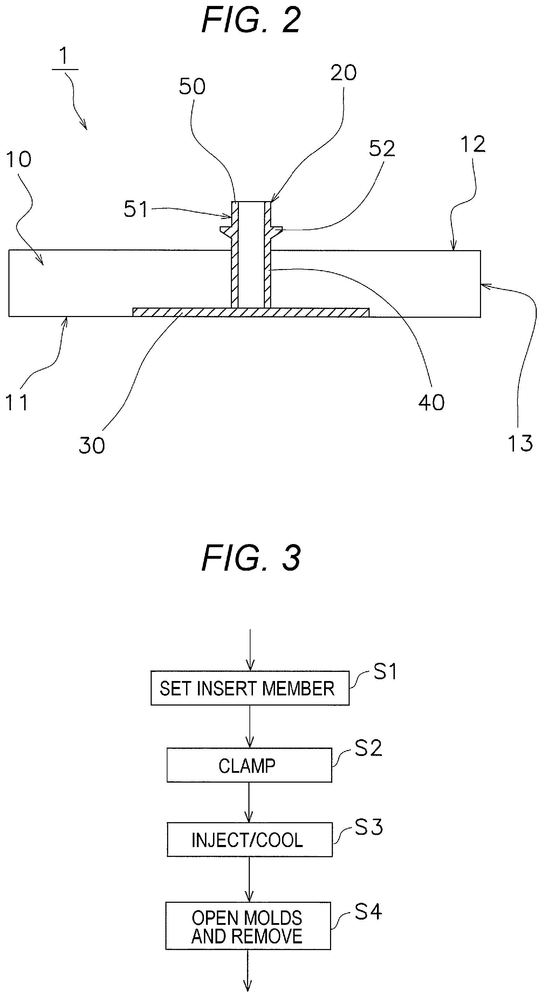

Figs. 1 and 2 show an example of a resin molded article 1 manufactured by a method for manufacturing a resin molded article according to a first embodiment of the present invention. Fig. 2 shows a cross section taken along line I-I in Fig. 1. The resin molded article 1 includes a resin molded body 10 and an insert member 20. In the resin molded article 1, the resin molded body 10 and the insert member 20 are integrated by insert molding.

The insert member 20 has a main body portion 30, an embedded portion 40, and an exposed portion 50. The main body portion 30 is inserted into the resin molded body 10. The main body portion 30 shown in Figs. 1 and 2 is a thin member having a rectangular shape in top view. The main body portion 30 is part of the insert member 20. The main body portion 30 is, for example, a film substrate having an electric circuit (not shown). However, the main body portion 30 is not limited to the film substrate, and may be another member. Furthermore, the shape of the main body portion 30 is not limited to the film shape, and may be another shape such as a three-dimensional shape or a spherical shape. The main body portion 30 is partially embedded in the resin molded body 10, and is partially exposed from a first principal surface 11 of the resin molded body 10. However, the place where main body portion 30 is disposed is not limited to the first principal surface 11. The main body portion 30 can also be disposed so as to be embedded in the resin molded body 10. The main body portion 30 may be disposed such that part thereof is embedded in the resin molded body 10, part thereof is exposed from the first principal surface 11, and part thereof is exposed from a second principal surface 12. The main body portion 30 may also be disposed such that part thereof is embedded in the resin molded body 10 and part thereof is exposed from a side surface 13 of the resin molded body 10.

The embedded portion 40 is a portion protruding from the main body portion 30 and embedded in the resin molded body 10. The embedded portion 40 is part of the insert member 20. The exposed portion 50 is a portion extending from the embedded portion 40 and exposed to the outside of the resin molded body 10.

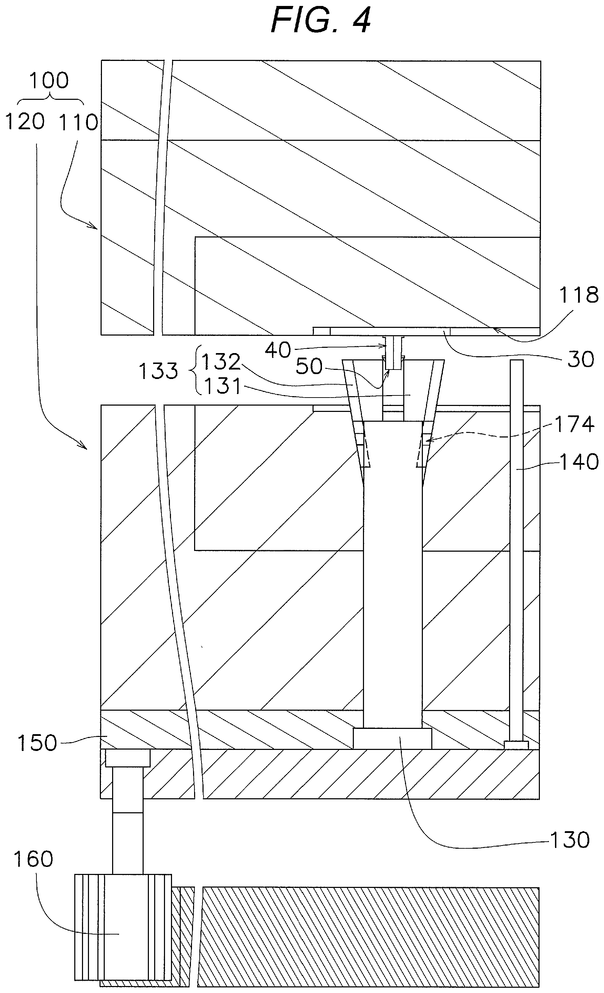

The exposed portion 50 is also part of the insert member 20. The exposed portion 50 includes an outer peripheral surface 51 exposed from the resin molded body 10 and two protrusions 52 protruding from the outer peripheral surface 51. The outer peripheral surface 51 is a surface of the tubular exposed portion 50 having an oval cross section. The two protrusions 52 are disposed at positions farther from the center axis of the tubular exposed portion 50 than a distance from the center axis to the outer peripheral surface 51. Therefore, even if a hole having the same size as that of the outer peripheral surface 51 of the exposed portion 50 is formed in a second mold 120 (see Fig. 4), the protrusions 52 are caught and the exposed portion 50 cannot be housed in the hole.

Here, the embedded portion 40 and the exposed portion 50 form one component. The component formed of the embedded portion 40 and the exposed portion 50 is, for example, a connector. The connector including the embedded portion 40 and the exposed portion 50 is electrically connected to, for example, the electric circuit of the main body portion 30 which is the film substrate. However, the component including the embedded portion 40 and the exposed portion 50 is not limited to the connector, and may be another member. Here, the component including the embedded portion 40 and the exposed portion 50 has a tubular shape, but the shape of the component including the embedded portion 40 and the exposed portion 50 is not limited to the tubular shape. The shape of the component including the embedded portion 40 and the exposed portion 50 may be, for example, another shape such as a columnar shape, a weight shape, or a plate shape.

Although the case where the main body portion 30 and the component including the embedded portion 40 and the exposed portion 50 are separate members has been described here, these components may be integrated. Here, a case where one main body portion 30, one embedded portion 40, and one exposed portion 50 are provided will be described. However, a plurality of main body portions 30 may be provided. A plurality of embedded portions 40 may be provided. A plurality of exposed portions 50 may be provided.

### (2) Outline of Method for Manufacturing Resin Molded Article

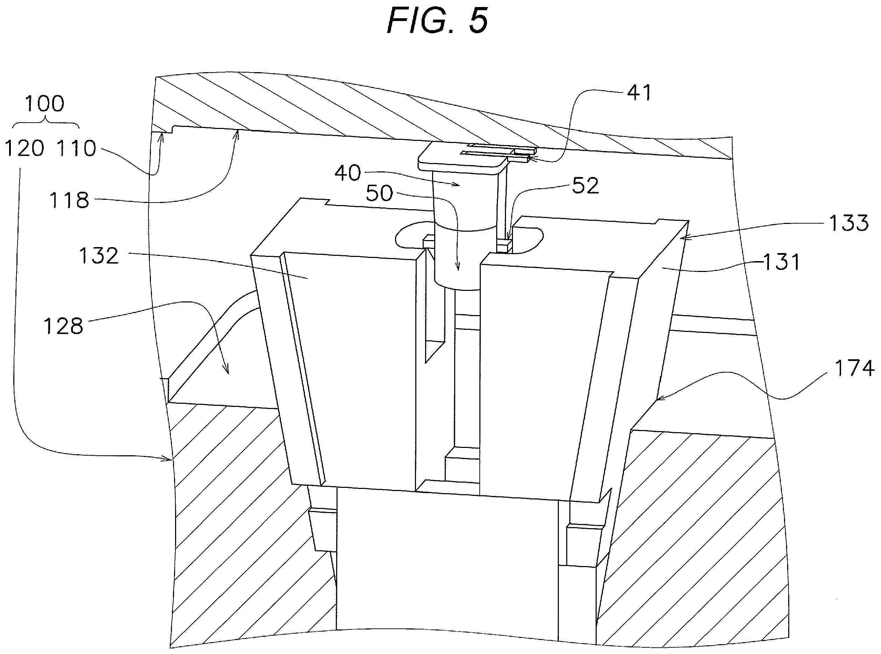

Fig. 3 shows the flow of the method for manufacturing the resin molded article 1. Figs. 4 to 7 show a mold 100 and the insert member 20 in the steps of the method for manufacturing the resin molded article 1. The cross section of the resin molded article 1 including the insert member 20 and the resin molded body 10 is shown in Fig. 2 described above. The main body portion 30 shown in Fig. 4 and provided in the insert member 20 is set on a first surface 118 of a first mold 110. On one principal surface of the main body portion 30, for example, copper wiring (not shown) for forming the electric circuit and an electrode terminal (not shown) electrically connected to the copper wiring are formed. The mold 100 includes the first mold 110 having the first surface 118 for forming a wall surface of a molding space for molding the resin molded body 10 and the second mold 120 having a second surface 128 (see Fig. 5). The mold 100 further includes a sliding pin 130 and an ejector pin 140 (see Fig. 4). The mold 100 still further includes an ejector plate 150 and a cylinder 160.

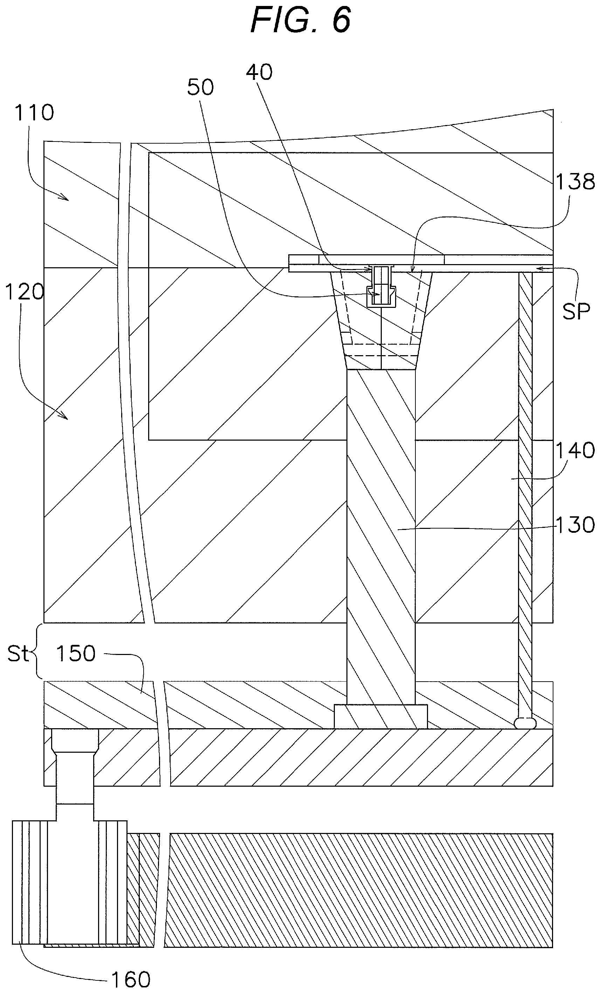

In a first step S1, the insert member 20 is set between the first mold 110 and the second mold 120. The insert member 20 is disposed such that one principal surface of the main body portion 30 faces the molding space SP (see Fig. 6). The embedded portion 40 and exposed portion 50 (tubular portion) of the insert member 20 protrude from the main body portion 30 in the sliding direction of the sliding pin 130.

In a second step S2, the first mold 110 and the second mold 120 are clamped to form the molding space SP (see Fig. 6) for housing the insert member 20. Figs. 4 and 5 show a state in which the first mold 110 and the second mold 120 are being clamped. Fig. 6 shows a state in which clamping of the first mold 110 and the second mold 120 is completed. Fig. 4 shows the cross sections of the first mold 110 and the second mold 120, but shows the side surfaces of the sliding pin 130 and the ejector pin 140. In Fig. 5, the main body portion 30 is not shown for the sake of the visibility of the embedded portion 40, the exposed portion 50, and the like. For example, an electrode terminal 41 for connecting the embedded portion 40 to the electrode terminal of the main body portion 30 is disposed in the embedded portion 40.

In the second step S2, the sliding pin 130 is slid in synchronization with the clamping of the first mold 110 and the second mold 120. The mold 100 deforms the sliding pin 130 so as to wrap the exposed portion 50 with the sliding pin 130 with the embedded portion 40 of the insert member 20 exposed to the molding space SP. In the stage after the clamping has been completed (see Fig. 6), a third surface 138, which is part of the wall surface of the molding space SP, is formed at a boundary between the embedded portion 40 and the exposed portion 50 by the sliding pin 130. Here, after the clamping has been completed, the upper surfaces of divided pieces 131, 132 of the sliding pin 130 are flush with the second surface 128 of the second mold 120 and form the third surface 138 of the molding space SP. The molding space SP shown in Fig. 6 is a closed space having the first surface 118, the second surface 128, and the third surface 138 as wall surfaces.

A housing portion 133 of the sliding pin 130 includes the plurality of divided pieces 131, 132. In other words, in the configuration shown in Figs. 4 and 5, the two divided pieces 131, 132 form the housing portion 133. In terms of the housing portion 133, in the second step S2, the exposed portion 50 is housed inside the housing portion 133 of the sliding pin 130 in an open state in synchronization with the mold clamping, and the housing portion 133 is deformed into a closed state. As a result, the housing portion 133 wraps the exposed portion 50, and forms the third surface 138.

In the second step S2, the two divided pieces 131, 132 are moved and combined when the exposed portion 50 is housed in the housing portion 133, and are deformed into the closed state accordingly.

In a third step S3, molten resin is injected into the molding space SP and is then solidified, and in this manner, the resin molded body 10 (see Fig. 1) into which the insert member 20 is inserted is molded. In the third step S3, the injection of the molten resin into the molding space SP and cooling for solidifying the molten resin are performed. In the third step S3, the embedded portion 40 is located in the molten resin, and the molten resin is injected until the molten resin comes into contact with the third surface 138 and is solidified.

In a fourth step S4, the first mold 110 and the second mold 120 are opened to take out the resin molded body 10 into which the insert member 20 is inserted. In the taken-out resin molded body 10, for example, the exposed portion 50 as shown in Fig. 1 is exposed from the resin molded body 10. On the other hand, the embedded portion 40 is embedded in the resin molded body 10.

In the fourth step S4, the two divided pieces 131, 132 are deformed into the open state by being separated when the exposed portion 50 is taken out of the housing portion 133.

In normal insert molding, a series of steps from the first step S1 to the fourth step S4 is repeatedly performed to manufacture a plurality of resin molded articles 1.

### (3) Materials Used for Manufacturing Resin Molded Article

### (3-1) Insert Member

As the insert member 20, the main body portion 30 is, for example, a film-shaped or plate-shaped printed board. For example, assuming that the film-shaped printed board is the main body portion 30, a film base material which is a main material of the printed board is insulating. As the insulating film base material, for example, a resin film or an elastomer film can be used. Examples of the material of the resin film include thermosetting resin and thermoplastic resin. Examples of the material of the resin film include polyimide, polyethylene terephthalate, polycarbonate, and cycloolefin. As the base material used for the main body portion 30, for example, a three-dimensional base material having a three-dimensional shape can also be used other than the film base material.

For example, a molded interconnect device (MID) can be used for the main body portion 30, and wiring may be formed on a surface of a member having a three-dimensional shape by laser direct structuring (LDS).

### (3-2) Material of Resin Molded Body

Examples of the thermoplastic resin to be the material of the molten resin include polyester resin, polyethylene terephthalate (PET) resin, acrylic resin, polycarbonate resin, polybutylene terephthalate (PBT) resin, triacetyl cellulose resin, polyimide resin, polyethylene naphthalate (PEN) resin, liquid crystal polymer (LCP) resin, cycloolefin polymer (COP), styrene resin, and ABS resin.

### (4) Description of Mold

### (4-1) First Mold and Second Mold

In the first embodiment, the first mold 110 is a cavity, and the second mold 120 is a core. The first mold 110 and the second mold 120 are made of metal, and examples of the metal material include iron, steel, and stainless steel. Not only the first surface 118 of the first mold 110 and the second surface 128 of the second mold but also the third surface 138 of the sliding pin 130 form the molding space SP into which the molten resin is injected.

### (4-2) Sliding Pin

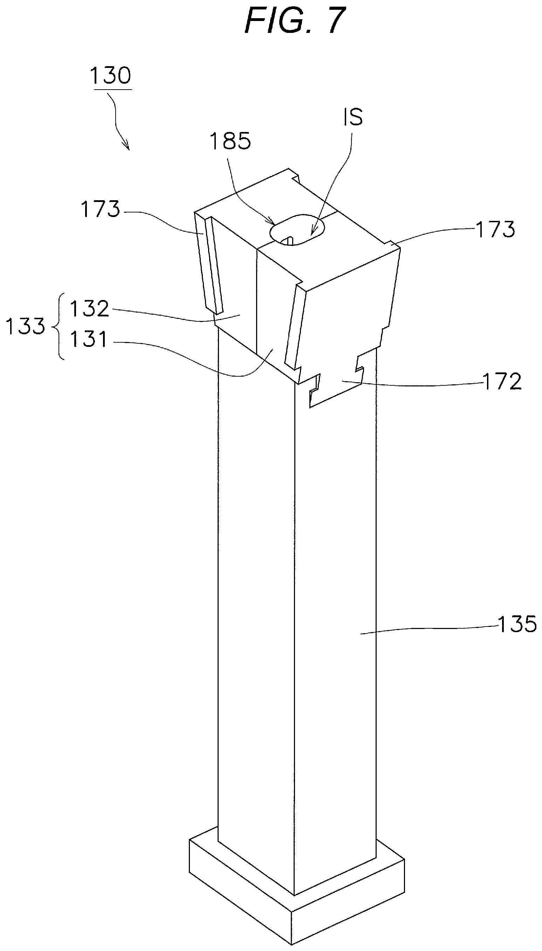

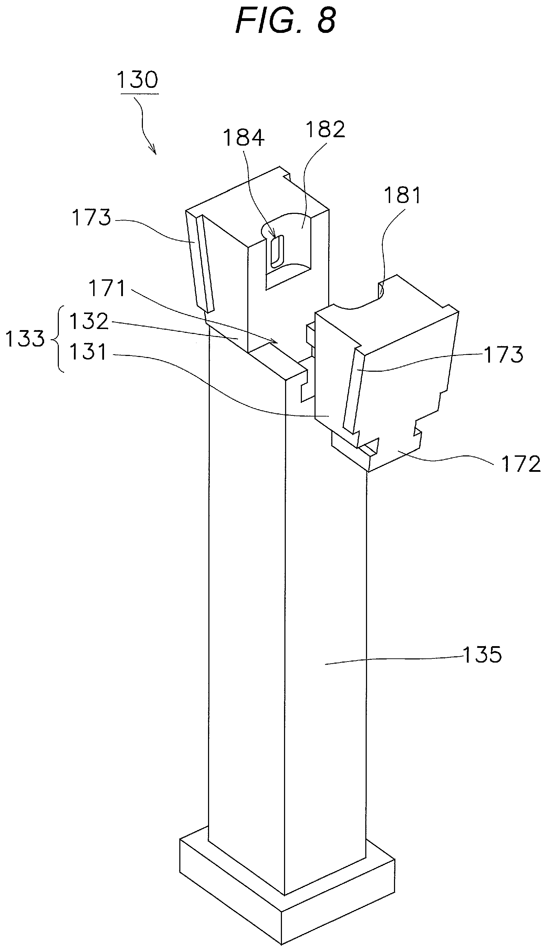

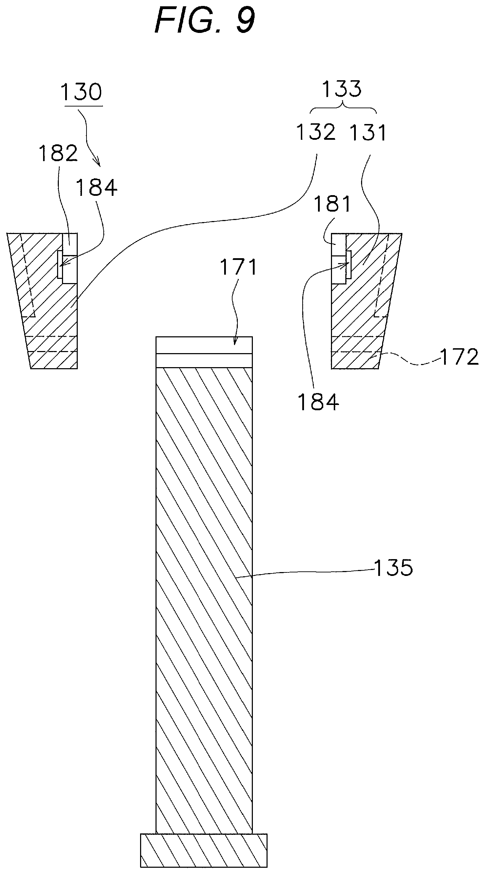

The sliding pin 130 includes the divided pieces 131, 132 and a sliding portion 135. The sliding pin 130 is made of, for example, metal, and examples of the metal material include iron, steel, and stainless steel. The sliding pin 130 is shown in Figs. 7, 8, 9 and 10. The two divided pieces 131, 132 form the housing portion 133. The sliding portion 135 is fixed to the ejector plate 150. The sliding portion 135 slides along with movement of the ejector plate 150. Here, the sliding portion 135 slides in the same direction as the movement direction of the first mold 110.

The sliding portion 135 has a T-groove 171 for slidably supporting the divided pieces 131, 132. Each of the divided pieces 131, 132 has a slider 172 having a T-shaped cross section fitted in the T-groove 171. As the slider 172 slides in the T-groove 171, the divided pieces 131, 132 move in a direction orthogonal to the sliding direction of the sliding portion 135. Each of the divided pieces 131, 132 has a guide rib 173 extending in a direction inclined with respect to the sliding direction of the sliding portion 135. A guide groove 174 (see Fig. 4) into which the guide rib 173 is fitted is formed in the second mold 120. Similarly to the guide rib 173, the guide groove 174 also extends in a direction inclined with respect to the sliding direction of the sliding portion 135. Since the guide rib 173 slides in the guide groove 174, the housing portion 133 is deformed by the sliding of the sliding portion 135. Specifically, when the sliding portion 135 slides so as to approach the first mold 110, the divided pieces 131, 132 slide in directions away from each other. Conversely, when the sliding portion 135 slides away from the first mold 110, the divided pieces 131, 132 slide in directions approaching each other.

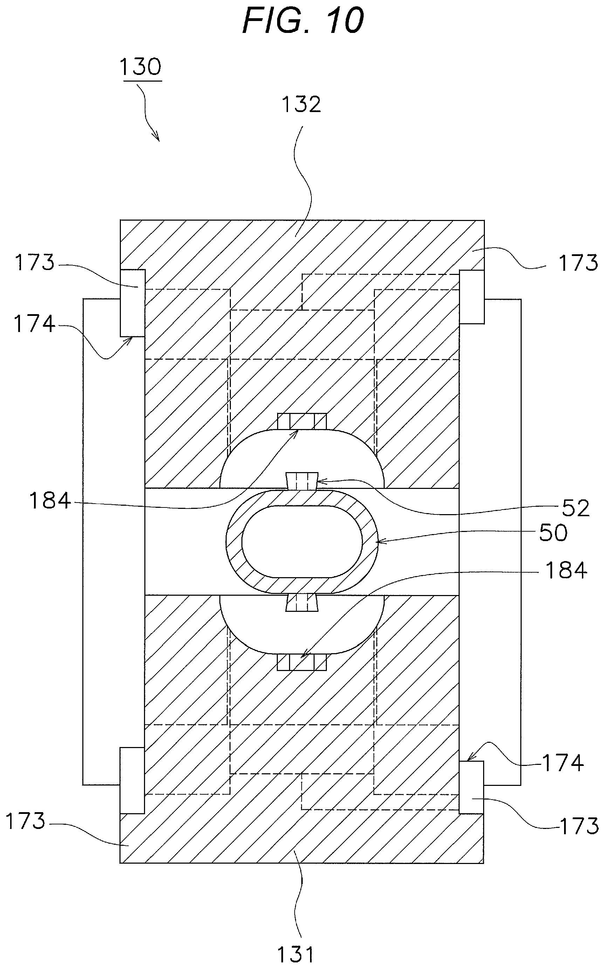

In the combined divided pieces 131, 132, an internal space IS (see Fig. 7) for housing the exposed portion 50 therein is formed. For this space, the divided piece 131 is formed with a recess 181 corresponding to the outer peripheral surface 51 of the exposed portion 50, and the divided piece 132 is formed with a recess 182 corresponding to the outer shape of the exposed portion 50. As shown in Fig. 10, each of the recesses 181, 182 is provided with a dent 184 into which the protrusion 52 of the exposed portion 50 is to be inserted. Fig. 10 shows the cross sections of the sliding pin 130 and the exposed portion 50 in a plane orthogonal to the sliding direction in the state of Fig. 5. The shape of an oval 185 of the combined divided pieces 131, 132 matches the shape of the boundary between the embedded portion 40 and the exposed portion 50. Therefore, since there is substantially no gap between the embedded portion 40 and the exposed portion 50 and the combined divided pieces 131, 132, the molten resin does not enter the internal space IS of the combined divided pieces 131, 132.

### (4-3) Cylinder

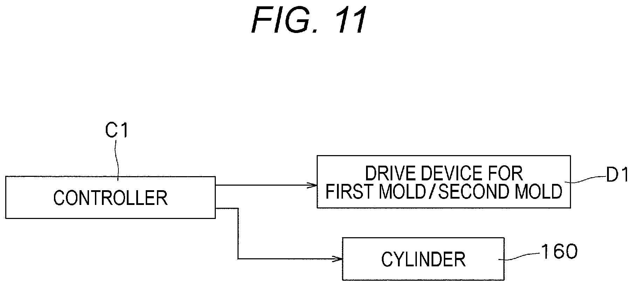

The cylinder 160 is an actuator that drives the ejector plate 150 to which the sliding pin 130 and the ejector pin 140 are fixed. As shown in Fig. 11, a controller C1 controls a drive device D1 that drives the first mold 110 and the second mold 120 and the cylinder 160. The ejector plate 150 changes an ejector stroke St shown in Fig. 6 by the cylinder 16. The controller C1 may include, for example, a computer (not shown). For example, an MPU or a CPU and a memory can be used as the computer.

The clamping of the first mold 110 and the second mold 120 is started in response to an instruction from the controller C1 to the drive device D1 from a state in which the first mold 110 and the second mold 120 are opened. Note that the second mold 120 does not move in the mold clamping. In a state in which the first mold 110 and the second mold 120 are opened, the divided pieces 131, 132 are also opened. The first mold 110 starts moving toward the second mold 120 with the divided pieces 131, 132 opened. At this time, the controller C1 controls the cylinder 160 such that the ejector plate 150 does not start moving. Next, at the timing when the exposed portion 50 enters the housing portion 133, the controller C1 controls the cylinder 160 to start the movement of the ejector plate 150, and controls the drive device D1 to continue the movement of the first mold 110. At the timing when the upper surfaces (third surface 138) of the divided pieces 131, 132 reach the boundary between the embedded portion 40 and the exposed portion 50, the controller C1 controls the drive device D1 and the cylinder 160 to stop the movement of the first mold 110 and the ejector plate 150. This increases the ejector stroke St between the second mold 120 and the ejector plate 150. As the ejector stroke St increases, the guide rib 173 moves along the guide groove 174, whereby the interval between the divided pieces 131, 132 decreases. As a result, the divided pieces 131, 132 are combined to form the molding space SP surrounded by the first surface 118, the second surface 128, and the third surface 138, and the clamping ends. As described above, in the clamping, the operations of the cylinder 160 and the drive device D1 are synchronized under the control of the controller C1.

The mold opening is started after the molding space SP has been filled with the molten resin and the molten resin has been solidified. The opening of the first mold 110 and the second mold 120 is started in response to an instruction from the controller C1 from a state in which the first mold 110 and the second mold 120 are closed. In a state in which the first mold 110 and the second mold 120 are closed, the divided pieces 131, 132 are also closed. The cylinder 160 maintains the state when the clamping is completed until the first mold 110 and the second mold 120 are completely opened. When the first mold 110 and the second mold 120 are completely opened, the cylinder 160 decreases the ejector stroke St between the second mold 120 and the ejector plate 150. As the ejector stroke St decreases, the guide rib 173 moves along the guide groove 174, whereby the interval between the divided pieces 131, 132 increases. As the ejector stroke St decreases, the ejector pin 140 also protrudes the resin molded article 1. When the divided pieces 131, 132 are opened and the ejector pin 140 is protruded, the opening of the first mold 110 and the second mold 120 is completed.

### <Second Embodiment>

### (5) Overall Configuration

In the first embodiment, the case where the sliding pin 130 is fixed to the ejector plate 150 has been described. However, a dedicated plate 155 for sliding the sliding pin 130 may be provided for a component other than the ejector plate 150.

In a second embodiment, since main components other than the dedicated plate 155, an ejector plate drive unit 164, an ejector return spring 165, and a dedicated plate return spring 166 are similar to those of the first embodiment, the description of the configurations of the first mold 110, the second mold 120, and the sliding pin 130 will be omitted.

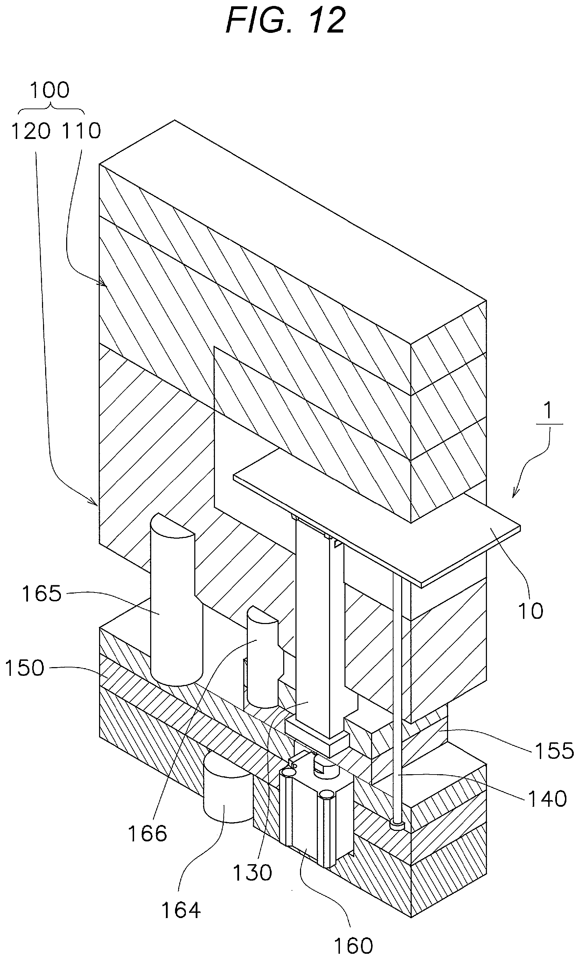

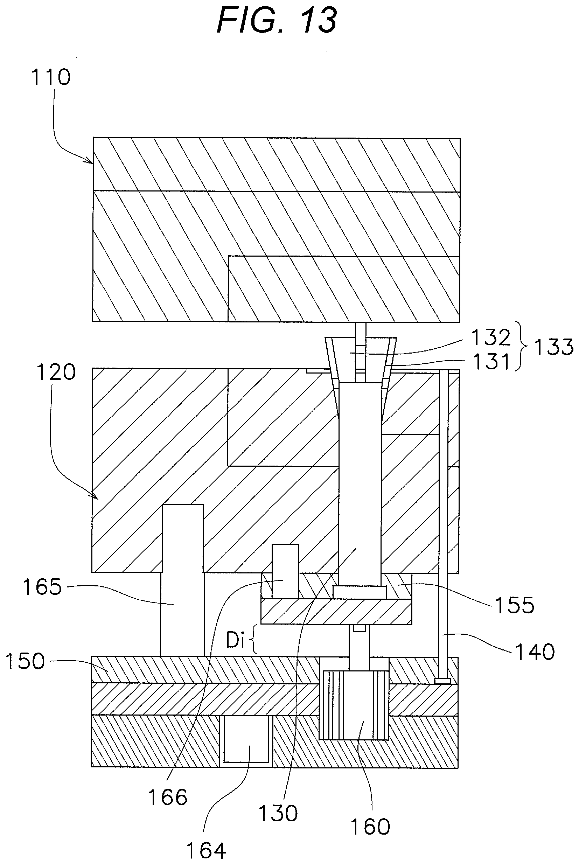

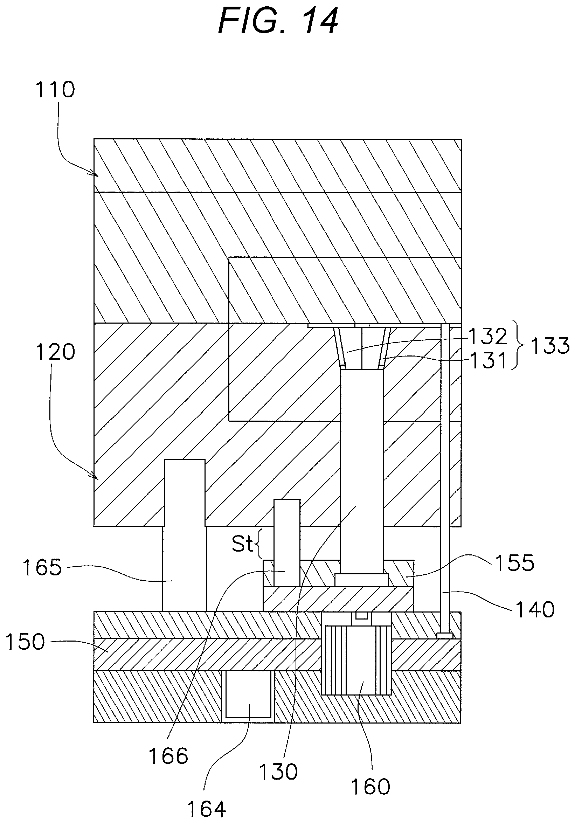

In the second embodiment, the cylinder 160 is an actuator that drives the dedicated plate 155 (see Fig. 12) to which the sliding pin 130 is fixed. Fig. 12 shows the dedicated plate 155 and the like when the first mold 110 and the second mold 120 are partially broken and viewed obliquely from above. The ejector plate 150 is driven by the ejector plate drive unit 164. In the second embodiment, the controller C1 controls the drive device D1 that drives the first mold 110 and the second mold 120, the ejector plate drive unit 164, and the cylinder 160. The ejector plate 150 changes the ejector stroke St shown in Fig. 14 by the ejector plate drive unit 164 and the ejector return spring 165. The dedicated plate 155 changes a sliding stroke Di shown in Fig. 13 by the cylinder 16 and the dedicated plate return spring 166. Figs. 12 to 15 show the cross sections of the first mold 110 and the second mold 120, but show the side surfaces of the sliding pin 130 and the ejector pin 140.

The clamping of the first mold 110 and the second mold 120 is started in response to an instruction from the controller C1 to the drive device D1 from a state in which the first mold 110 and the second mold 120 are opened. Note that the second mold 120 does not move in the mold clamping. In a state in which the first mold 110 and the second mold 120 are opened, the divided pieces 131, 132 are also opened. First, the first mold 110 starts to move toward the second mold 120. At this time, the controller C1 controls the cylinder 160 such that the ejector plate 150 does not start moving. The first mold 110 moves toward the second mold 120 with the divided pieces 131, 132 opened. At this time, the ejector plate 150 moves in a direction away from the second mold 120 by the ejector return spring 165. However, the dedicated plate 155 is supported by the cylinder 160 and does not move, and therefore, stands still relative to the second mold 120. That is, when the controller C1 controls the drive device D1 and the cylinder 160, an operation of moving the first mold 110 and the ejector plate 150 and causing the dedicated plate 155 to stand still is performed.

Next, at the timing when the exposed portion 50 enters the housing portion 133, the controller C1 controls the cylinder 160 to start the movement of the dedicated plate 155, and controls the drive device D1 to continue the movement of the first mold 110. At the timing when the upper surfaces (third surface 138) of the divided pieces 131, 132 reach the boundary between the embedded portion 40 and the exposed portion 50, the controller C1 controls the drive device D1 and the cylinder 160 to stop the movement of the first mold 110 and the dedicated plate 155. As a result, the sliding stroke Di between the second mold 120 and the dedicated plate 155 decreases. At this time, the dedicated plate return spring 166 is extended. As the sliding stroke Di decreases, the guide rib 173 moves along the guide groove 174, whereby the interval between the divided pieces 131, 132 decreases. The divided pieces 131, 132 are combined to form the molding space SP surrounded by the first surface 118, the second surface 128, and the third surface 138, and the clamping ends. As described above, in the clamping, the operations of the cylinder 160 and the drive device D1 are synchronized under the control of the controller C1.

The mold opening is started after the molding space SP has been filled with the molten resin and the molten resin has been solidified. The opening of the first mold 110 and the second mold 120 is started in response to an instruction from the controller C1 from a state in which the first mold 110 and the second mold 120 are closed. In a state in which the first mold 110 and the second mold 120 are closed, the divided pieces 131, 132 are also closed. When the mold opening is started, the drive device D1 controlled by the controller C1 opens the first mold 110 and moves the ejector plate 150 at the same time. As the ejector plate 150 moves, the ejector return spring 165 is contracted. The ejector pin 140 protrudes by being pushed by the ejector plate 150, and the dedicated plate 155 moves toward the second mold 120. As the ejector plate 150 approaches the second mold 120, the ejector stroke St decreases. When the first mold 110 and the second mold 120 are completely opened, the ejector stroke St reaches zero.

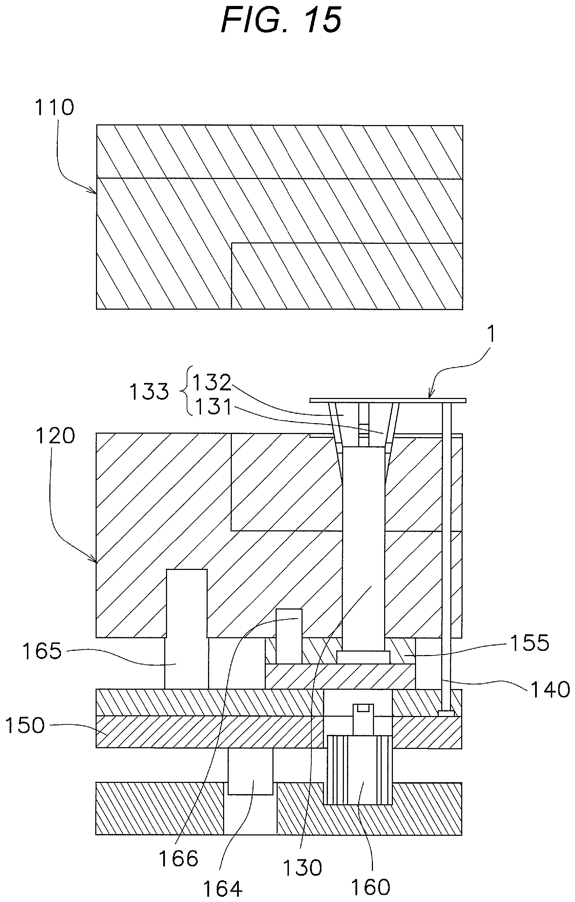

As the ejector stroke St decreases, the guide rib 173 moves along the guide groove 174, whereby the interval between the divided pieces 131, 132 increases. As the ejector stroke St decreases, the ejector pin 140 also protrudes the resin molded article 1 as shown in Fig. 15. When the divided pieces 131, 132 are opened and the ejector pin 140 is protruded, the opening of the first mold 110 and the second mold 120 is completed.

### <Third Embodiment>

### (6) Overall Configuration

In the first embodiment, the case where the entrance of the molten resin is prevented by substantially eliminating the gap between the third surface 138 formed by the sliding pin 130 and the boundary between the embedded portion 40 and the exposed portion 50 has been described. As described in a third embodiment, the entrance of the molten resin may be prevented by the internal space IS of the housing portion 133 rather than the third surface 138.

In the third embodiment, since main components other than the sliding pin 130 and the insert member 20 can be configured in a manner similar to that in the first embodiment, the description of the configurations of the first mold 110, the second mold 120, the ejector plate 150, and the cylinder 160 will be omitted.

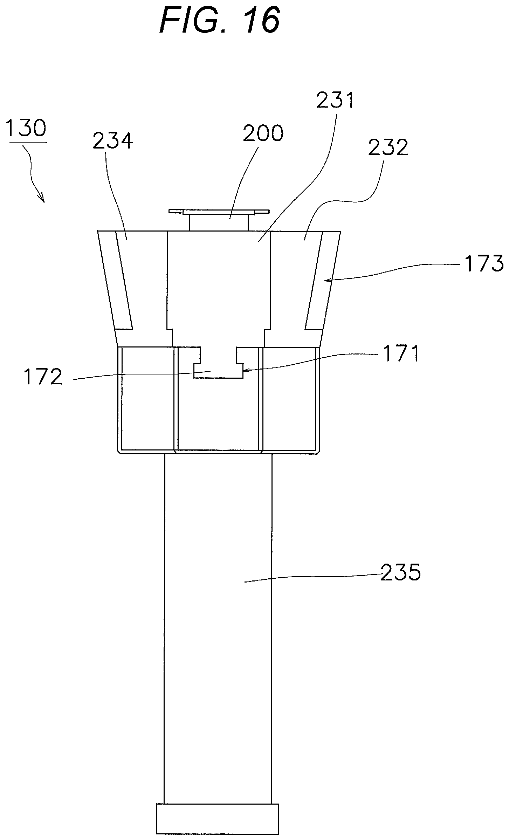

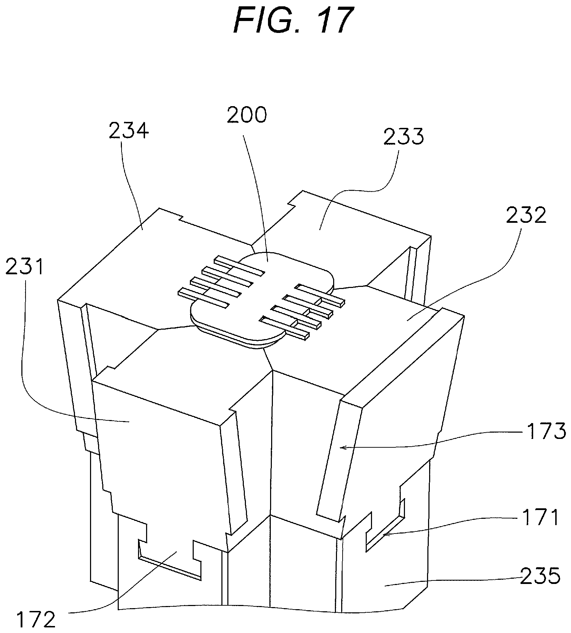

Figs. 16, 17, 18, 19, and 20 show the sliding pin 130 and a connector 200 including the embedded portion 40 and exposed portion 50 of the insert member 20. The sliding pin 130 of the third embodiment includes four divided pieces 231, 232, 233, 234 and a sliding portion 235. The four divided pieces 231, 232, 233, 234 form the housing portion 133. The sliding portion 235 of the third embodiment is fixed to the ejector plate 150 as in the first embodiment or the dedicated plate 155 as in the second embodiment. The sliding portion 235 slides along with movement of the ejector plate 150 or the dedicated plate 155.

The sliding portion 235 has the T-groove 171 for slidably supporting the four divided pieces 231 to 234, which extends in a cross shape in plan view. Each of the divided pieces 231 to 234 has the slider 172 having the T-shaped cross section fitted in the T-groove 171. As the slider 172 slides in the T-groove 171 in the cross shape in plan view, the divided pieces 231 to 234 move in directions orthogonal to the sliding direction of the sliding portion 235 from four sides and are combined. Each of the divided pieces 231 to 234 has the guide rib 173 extending in the direction inclined with respect to the sliding direction of the sliding portion 235.

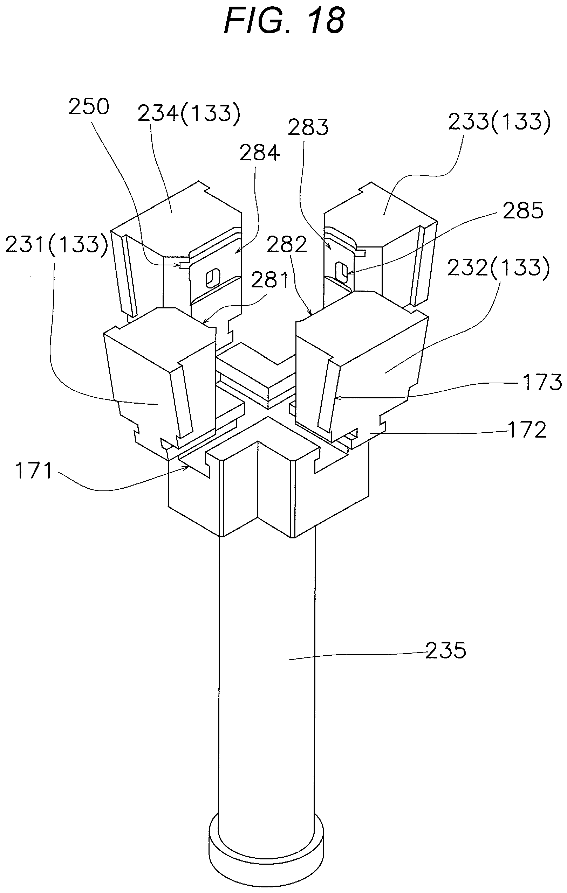

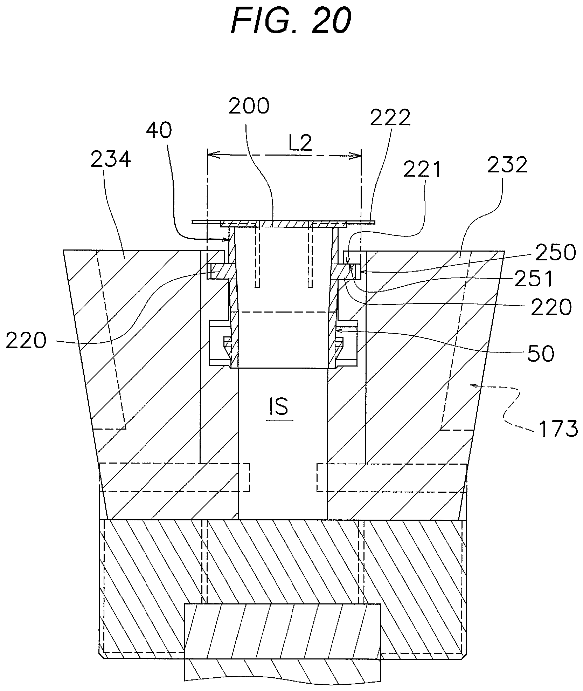

In the combined divided pieces 231 to 234, the internal space IS (see Fig. 20) for housing the exposed portion 50 therein is formed. For this space, as shown in Fig. 18, the divided pieces 231 to 234 are formed with recesses 281 to 284 corresponding to the outer peripheral surface 210 of the exposed portion 50. Each of the recesses 281 to 284 is provided with a dent 285 into which the protrusion 52 of the exposed portion 50 is to be inserted.

The connector 200 of the insert member 20 has a dam portion 220 on the outer peripheral surface 210 of the exposed portion 50. The dam portion 220 protrudes in an annular shape to block the molten resin. The divided pieces 231 to 234 (housing portion 133) have an annular groove 250 in which the exposed portion 50 can move in a direction intersecting the sliding direction and which can annularly contact the dam portion 220. As shown in Fig. 20, an upper wall 251 of the groove 250 contacts the upper surface 221 of the dam portion 220. Therefore, since there is substantially no gap between the exposed portion 50 and the combined divided pieces 231 to 234, the molten resin does not enter the internal space IS of the combined divided pieces 231 to 234 (housing portion 133). Since the width L1 of the annular dam portion 220 is smaller than the width L2 of the annular groove 250, a manufacturing error of the connector 200 is easily accepted. In such a manufacturing method, a region from the upper surface 221 of the dam portion 220 to the third surface 138 is the boundary between the exposed portion 50 and the embedded portion 40. An electrode terminal 222 is disposed on the embedded portion 40.

### <Fourth Embodiment>

### (7) Overall Configuration

In the first embodiment, the case where the T-groove 171 of the sliding pin 130 is formed to extend in the direction orthogonal to the sliding direction has been described. However, the T-groove 171 of the sliding pin 130 may be formed to extend in a direction inclined with respect to the sliding direction.

In a fourth embodiment, since main components other than the sliding pin 130 are similar to those of the first embodiment, the description of the configurations of the first mold 110 and the second mold 120 will be omitted.

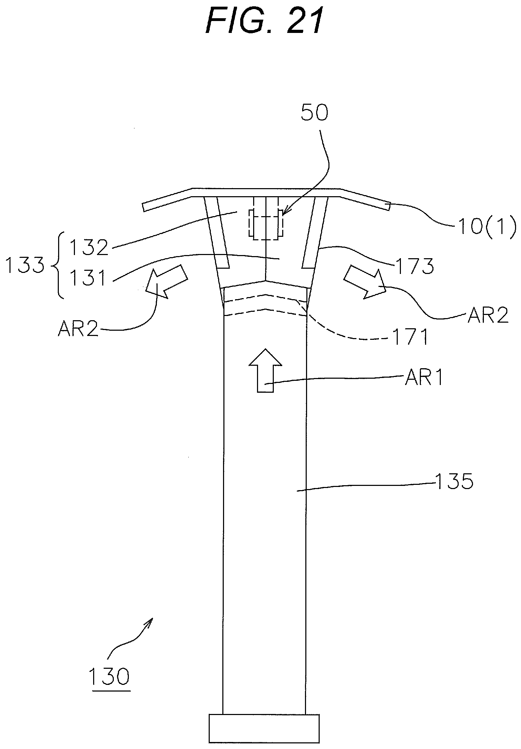

Figs. 21, 22, 23, and 24 show the sliding pin 130 and the resin molded body 10. The sliding pin 130 of the fourth embodiment includes the two divided pieces 131, 132 and the sliding portion 135. The two divided pieces 131, 132 form the housing portion 133. The sliding portion 135 of the fourth embodiment is fixed to the ejector plate 150 as in the first embodiment or the dedicated plate 155 as in the second embodiment. The sliding portion 135 slides along with the movement of the ejector plate 150 or the dedicated plate 155. An arrow AR1 in Fig. 21 indicates a direction at the time of the mold opening in the sliding direction, and an arrow AR2 indicates a direction at the time of the mold opening in the movement direction of the divided pieces 131, 132. In the mold opening, the divided pieces 131, 132 move away from the resin molded body 10. In other words, the divided pieces 131, 132 move in a direction inclined with respect to the direction orthogonal to the sliding direction.

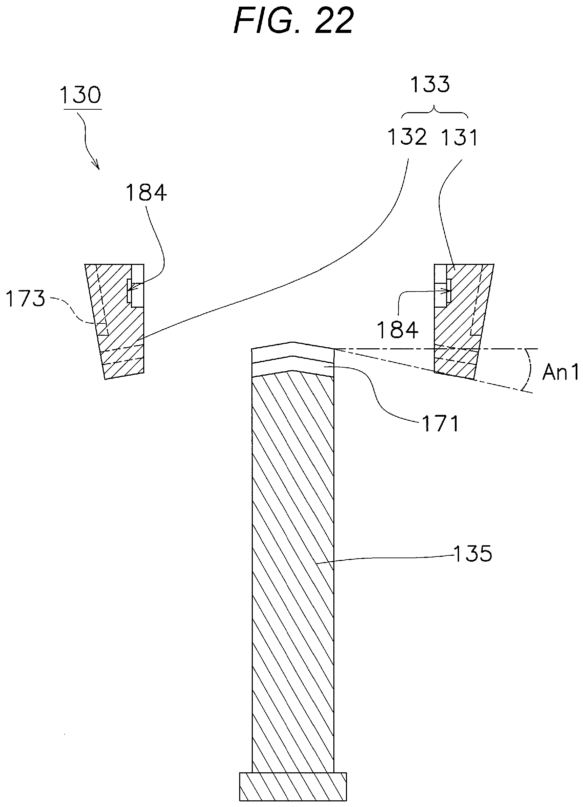

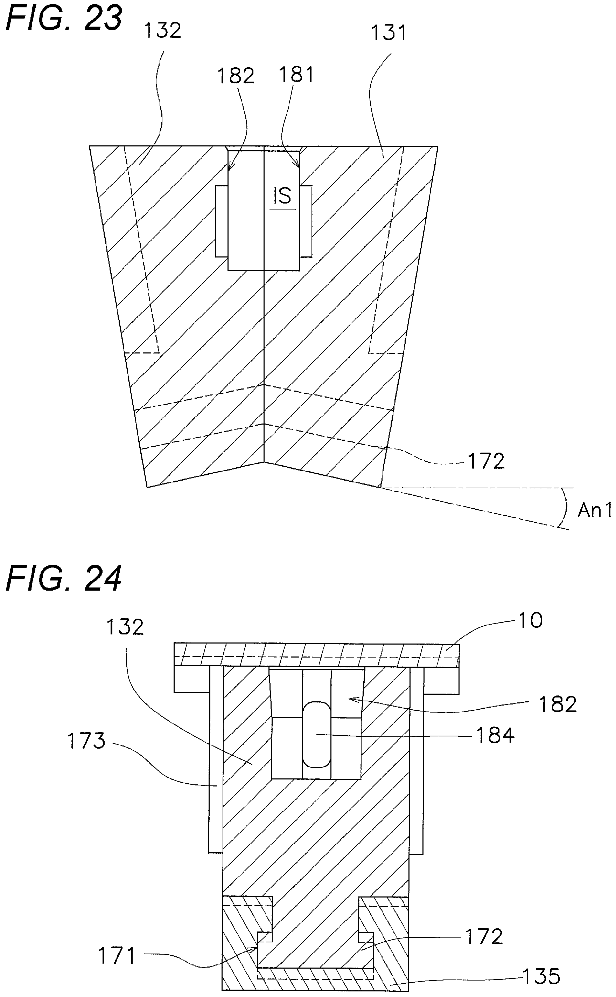

Therefore, the sliding portion 135 has the T-groove 171 for slidably supporting the divided pieces 131, 132, which extends in a direction inclined with respect to the direction orthogonal to the sliding direction in side view. As shown in Fig. 22, the extending direction of the T-groove 171 is inclined by an angle An1 with respect to the direction orthogonal to the sliding direction. Moreover, as shown in Fig. 23, the extending direction of the slider 172 is inclined by the angle An1 with respect to the direction orthogonal to the sliding direction.

When the divided pieces 131, 132 moves in the inclined direction (direction of the arrow AR2), as shown in Fig. 21, even in a case where the resin molded body 10 is bent, the divided pieces 131, 132 can move without contacting the resin molded body 10. In addition to such a case, for example, the present invention can be applied to a case where the resin molded body 10 has a protrusion protruding from the third surface 138, and a case where a protrusion other than the exposed portion 50 protrudes from the resin molded body 10.

### <Fifth Embodiment>

### (8) Overall Configuration

In the first to fourth embodiments, the case where the divided pieces 131, 132 or the divided pieces 231 to 234 are the components separable from the sliding portion 135, 235 has been described. In the first to fourth embodiments, the sliding pin 130 is formed such that the sliders 172 of the divided pieces 131, 132 or the divided pieces 231 to 234 slide in the T-grooves 171 to deform the housing portion 133. However, the divided pieces are not necessarily separable from the sliding portion, and the divided pieces may be connected to the sliding portion.

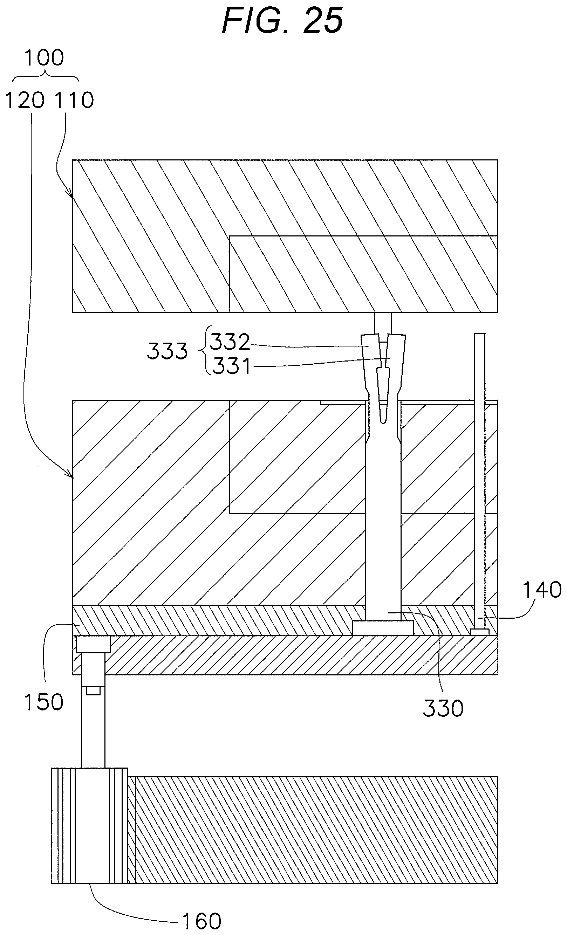

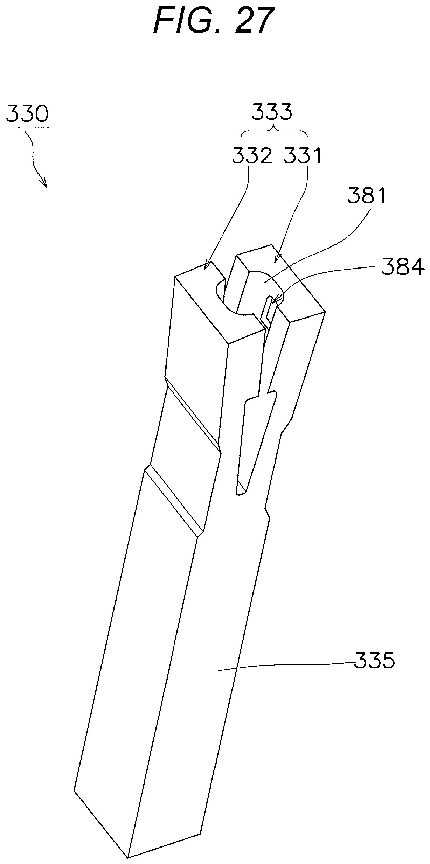

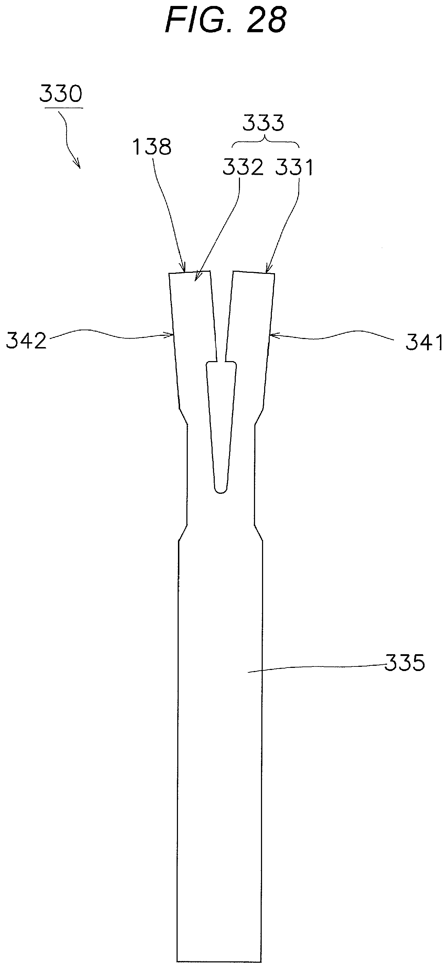

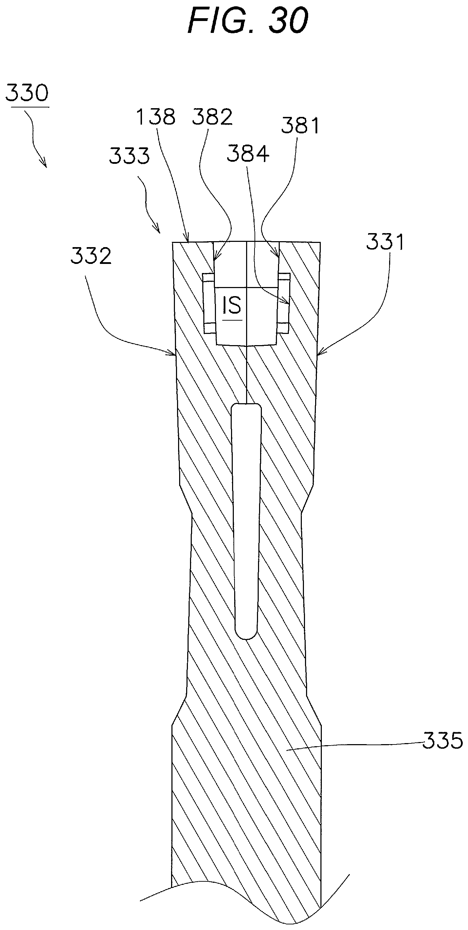

Figs. 25, 26, 27, 28, 29, and 30 show a first mold 110 and a second mold 120 according to a fifth embodiment, and a sliding pin 330 in which a sliding portion 335 is connected to two divided pieces 331, 332. In other words, the sliding pin 330 of the fifth embodiment has a distal end split into two portions and having the divided pieces 331, 332 (see Figs. 27 and 28). If no force is applied to the divided pieces 331, 332, the divided pieces 331, 332 are separated from each other. The sliding pin 330 is made of metal. When force is applied in a direction in which the divided pieces 331, 332 approach each other, the divided pieces 331, 332 are combined to form the internal space IS (see Fig. 30).

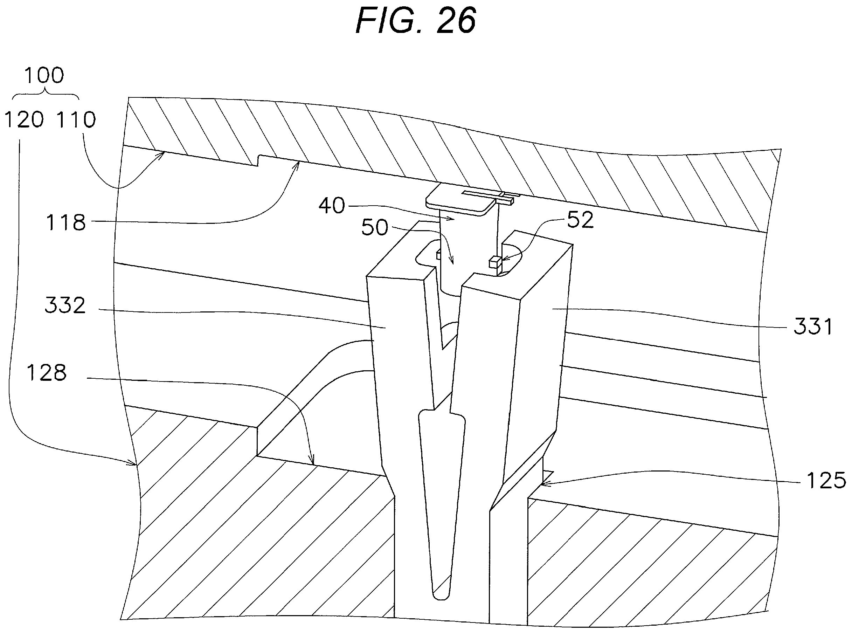

As shown in Figs. 25 and 26, the divided pieces 331, 332 are opened from the mold open state to the middle of the mold clamping. Therefore, the exposed portion 50 having the protrusion 52 can be inserted between the divided pieces 331, 332. As the clamping further progresses, the inclined back surfaces 341, 342 (see Fig. 28) of the divided pieces 331, 332 contact the opening edge 125 of the second mold 120. Since the size of the opening edge 125 is substantially equal to the size of the combined divided pieces 331, 332, as the clamping progresses and the sliding pin 330 is drawn into the second mold 120, the divided pieces 331, 332 pushed by the opening edge 125 approach each other. When the clamping is completed, the divided pieces 331, 332 are combined, and the upper surface of the sliding pin 330 forms the third surface 138 (see

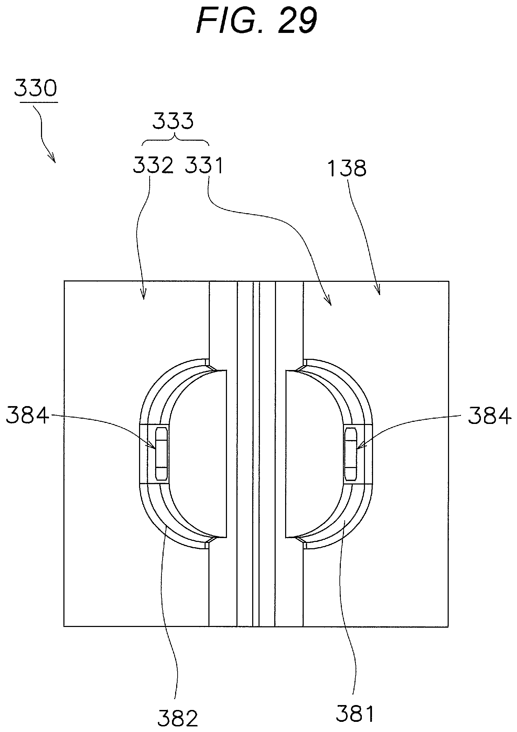

Fig. 29). When the first mold 110 and the second mold 120 are completely opened, the ejector plate 150 is brought close to the second mold 120, and the ejector pin 140 and the sliding pin 330 are protruded from the second mold 120. At this time, the distal end of the sliding portion 335 is deformed such that the elastically-deformed sliding portion 335 of the sliding pin 330 is released, and the divided pieces 331, 332 are opened.

Recesses 381, 382 and dents 384 of the sliding pin 330 have configurations similar to those of the recesses 181, 182 and dent 184 of the sliding pin 130 of the first embodiment. Note that in the fifth embodiment, components similar to those of the first embodiment are denoted by the same reference numerals, and the description thereof will be omitted. Fig. 25 shows the cross sections of the first mold 110 and the second mold 120, but shows the side surfaces of the sliding pin 330 and the ejector pin 140.

### (9) Modifications

### (9-1) Modification A

In the first to fifth embodiments, the example where one sliding pin 130, 330 is provided in the second mold 120 has been described. However, a plurality of exposed portions 50 can be provided in one resin molded article 1. Therefore, a plurality of sliding pins 130, 330 may be provided in the second mold 120. The sliding pin 130, 330 can also be provided in the first mold 110. For example, the first mold 110 can be provided with the dedicated plate 155 and the cylinder 160.

### (9-2) Modification B

In the first to fifth embodiments, the case where the sliding pin 130, 330 slides in the same direction as the relative movement direction of the first mold 110 and the second mold 120 has been described. However, the sliding pin 130, 330 can also be slid in a direction inclined with respect to the relative movement direction of the first mold 110 and the second mold 120.

### (9-3) Modification C

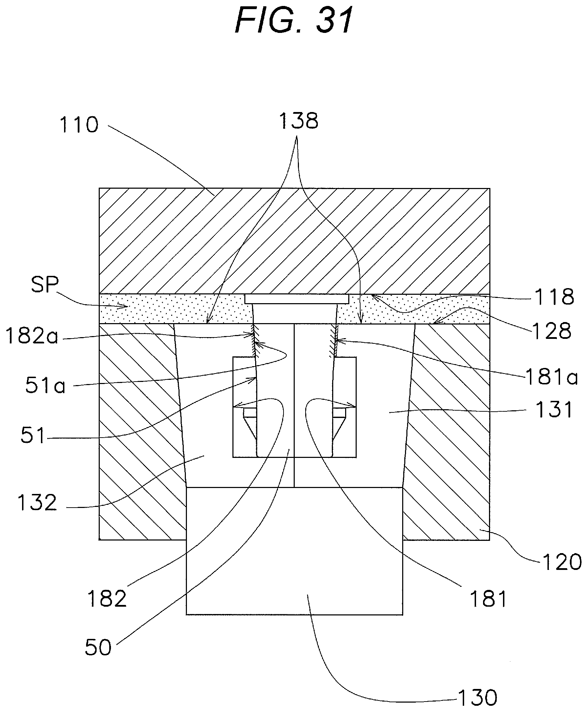

In the first to fifth embodiments, for example, as shown in Fig. 31, the case where part 51a of the outer peripheral surface 51 of the exposed portion 50 and contact surfaces 181a, 182a of the recesses 181, 182 contact each other has been described. In this case, the exposed portion 50 can be exposed from the resin molded body 10 by bringing the arc-shaped contact surface 181a and the arc-shaped contact surface 182a together into contact with the entirety of the part 51a of the ring-shaped outer peripheral surface 51.

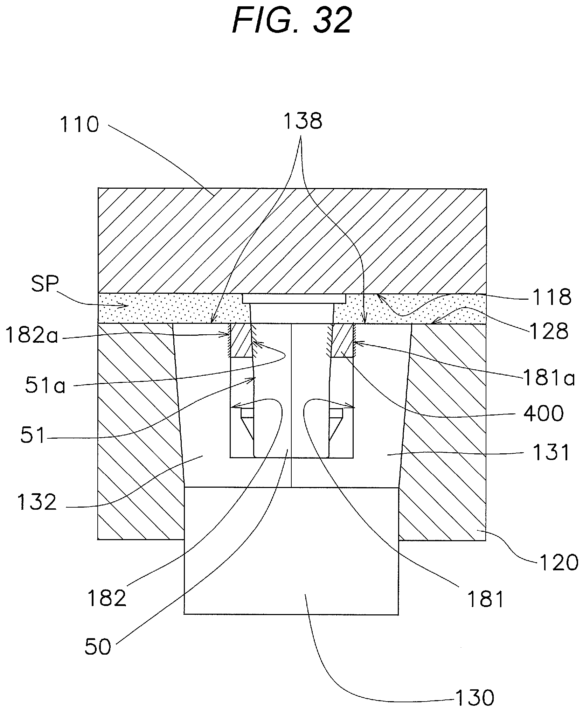

However, as shown in Fig. 32, a sealing member 400 may be interposed between the part 51a of the outer peripheral surface 51 of the exposed portion 50 and the contact surfaces 181a, 182a of the recesses 181, 182. As the sealing member 400, for example, a heat-resistant rubber, a heat-resistant resin film, or a metal film can be wound around the exposed portion 50. After the molding, the sealing member 400 is removed. Also in this case, the sliding pin 130 changes to the position at which the sliding pin 130 forms the third surface 138, and wraps the exposed portion 50 with the embedded portion 40 of the insert member 20 exposed to the molding space SP. However, in this case, only the sliding pin 130 cannot bring the housing portion 133 into the closed state to prevent the molten resin from flowing into the internal space of the housing portion 133, and the housing portion 133 and the sealing member 400 cooperate with each other to close the internal space of the housing portion 133.

### (9-4) Modification D

In the first to fifth embodiments, the case where the sliding pin 130, 330 is partially the divided pieces 131, 132, the divided pieces 231, 232, 233, 234, or the divided pieces 331, 332 has been described. In this sliding pin 130, 330, one sliding portion 135, 335 slides, whereby the divided pieces 131, 132, 231 to 234, 331, 332 are deformed.

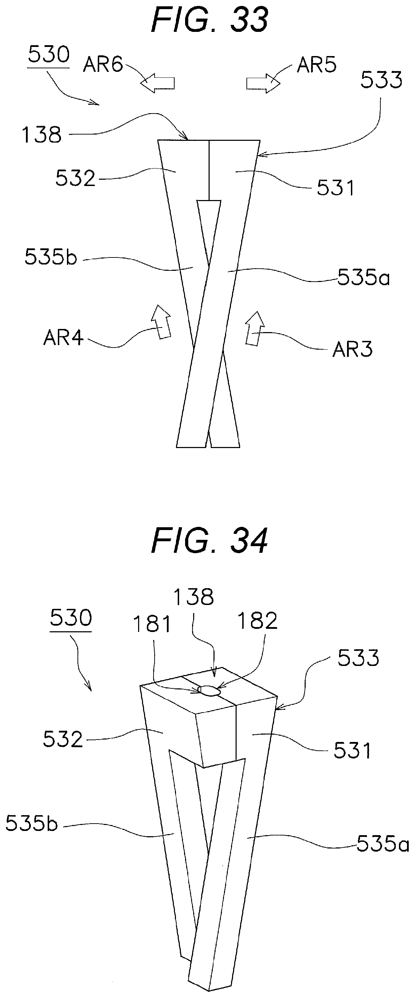

However, as in a sliding pin 530 shown in Figs. 33 and 34, the sliding pin may be configured to have two sliding portions 535a, 535b. In the sliding pin 530, a divided portion 531 is formed integrally with the sliding portion 535a, and a divided portion 532 is formed integrally with the sliding portion 535b. A housing portion 533 includes the two divided portions 531, 532. The sliding portions 535a, 535b of the sliding pin 530 slide in directions different from each other. As the sliding portion 535a slides in the direction of an arrow AR3, the divided portion 531 moves in the direction of an arrow AR5. As the sliding portion 535b slides in the direction of an arrow AR4, the divided portion 532 moves in the direction of an arrow AR6. In other words, as the sliding portions 535a, 535b slide toward the divided portions 531, 532, the two divided portions 531, 532 change in directions away from each other.

The state shown in Figs. 33 and 34 is a state in which the two divided portions 531, 532 are combined and the upper surfaces of the divided portions 531, 532 form the third surface 138. When the divided portions 531, 532 are combined, the recesses 181, 182 can be combined to form the space for housing the exposed portion 50 (see Fig. 31).

### (9-5) Modification E

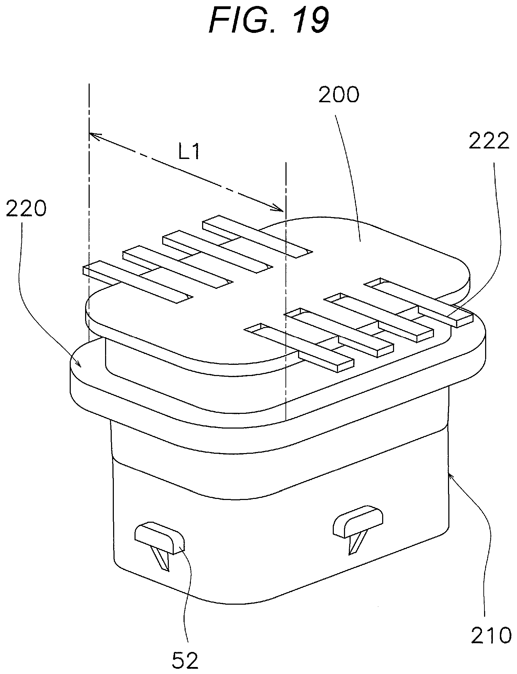

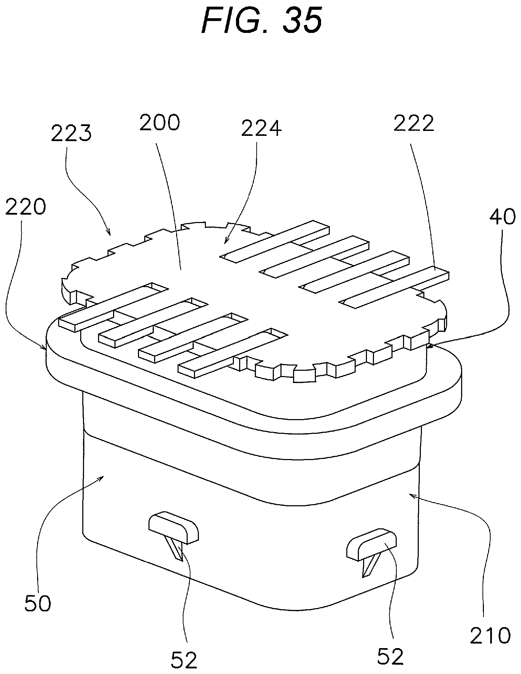

Fig. 35 shows a connector 200 according to Modification E. The connector according to Modification E is different from the connector 200 (see Fig. 19) according to the third embodiment in that part of the embedded portion 40, which is a close contact surface with the resin molded body, has a recessed-raised shape 223 and is more likely to be caught. In the connector 200 shown in Fig. 35, the recessed-raised shape 223 is formed in a flat portion 224 at which the electrode terminal 222 is formed. However, the location where the recessed-raised shape 223 is formed is not limited to the flat portion 224, and may be any location in the embedded portion 40. Since the embedded portion 40 has the recessed-raised shape 223, the embedded portion 40 is more likely to be caught by the resin molded body 10, and the fixing strength of the connector 200 to the resin molded body 10 can be improved.

### (10) Features

(10-1) In the method for manufacturing the resin molded article 1 as described in the first to fifth embodiments, the sliding pin 130, 330 is deformed so as to wrap the exposed portion 50. Therefore, for example, even if the shape of the exposed portion 50 is a complicated shape having the protrusion 52, the exposed portion 50 can be exposed to the outside of the resin molded body 10, and the embedded portion 40 can be embedded inside the resin molded body 10. The resin molded article 1 including the insert member 20 having the exposed portion 50 and the embedded portion 40 as described above can be easily manufactured. In the resin molded article 1 manufactured in this manner, the embedded portion 40 and the exposed portion 50 are firmly supported by the resin molded body 10, and the periphery of the boundary between the embedded portion 40 and the main body portion 30 is sealed by the resin molded body 10.

(10-2) In the method for manufacturing the resin molded article 1 as described above, the exposed portion 50 is housed in the housing portion 133, 333 of the sliding pin 130, 330 in the open state in synchronization with the mold clamping, and the housing portion 133, 333 is deformed into the closed state to wrap the exposed portion 50 in the second step S2. Then, the third surface 138 is formed by deforming the housing portion 133, 333 into the closed state, and in the third step S3, part of the outer surface of the resin molded body 10 is formed by the third surface 138 without the molten resin flowing into the housing portion 133, 333. Further, in the fourth step S4, the housing portion 133, 333 in the closed state is deformed into the open state, and the exposed portion 50 is taken out of the housing portion 133, 333. When the method for manufacturing the resin molded article 1 is configured as described above, by deforming the housing portion from the open state to the closed state in synchronization with the clamping, the sliding pin 130, 330 can be changed using the clamping of the first mold 110 and the second mold 120, and the manufacturing steps and device can be simplified.

(10-3) In the method for manufacturing the resin molded article 1 as described above, the housing portion 133 of the sliding pin 130 includes the plurality of divided pieces 131, 132 or divided pieces 231 to 234. The plurality of divided pieces 131, 132 or divided pieces 231 to 234 is deformed into the closed state by sliding and being combined when the exposed portion 50 is housed inside the housing portion 133 in the second step S2. The plurality of divided pieces 131, 132 or divided pieces 231 to 234 is deformed into the open state by being separated when the exposed portion 50 is taken out of the housing portion 133 in the fourth step S4. In such a method for manufacturing the resin molded article 1, since the housing portion 133 includes the plurality of divided pieces 131, 132 or divided pieces 231 to 234, it is easy to form the housing portion 133 according to the shape of the exposed portion 50.

(10-4) In the method for manufacturing the resin molded article 1 as described with reference to Figs. 21 to 24, the plurality of divided pieces 131, 132 or divided pieces 231 to 234 can be configured to slide in a direction away from the resin molded body 10 when separated. In the method for manufacturing the resin molded article 1 configured as described above, it is possible to reduce the influence of the sliding pin 130 on the resin molded article 1 during sliding. For example, the sliding pin 130 is less likely to be rubbed against the resin molded body 10 during sliding, and a portion protruding toward the sliding portion 135 from the third surface 138 of the resin molded body 10 is easily formed.

(10-5) In the method for manufacturing the resin molded article 1 as described with reference to Figs. 16 to 20, the exposed portion 50 has, on the outer peripheral surface 210, the dam portion 220 protruding in the annular shape and damming the molten resin. The housing portion 133 has the annular groove 250 in which the exposed portion 50 can move in the direction intersecting the sliding direction and which can annularly contact the dam portion 220. In the method for manufacturing the resin molded article 1 having such a configuration, for example, even upon movement by the difference between the width L1 of the dam portion 220 and the width L2 of the annular groove 250, the entrance of the resin can be prevented, so that, for example, the tolerance for the dimensional error of the insert member 20 can be increased.

In the resin molded article 1 having the dam portion 220, the resin molded body 10 contacts the dam portion 220.

### <Sixth Embodiment>

### (11) Overall Configuration

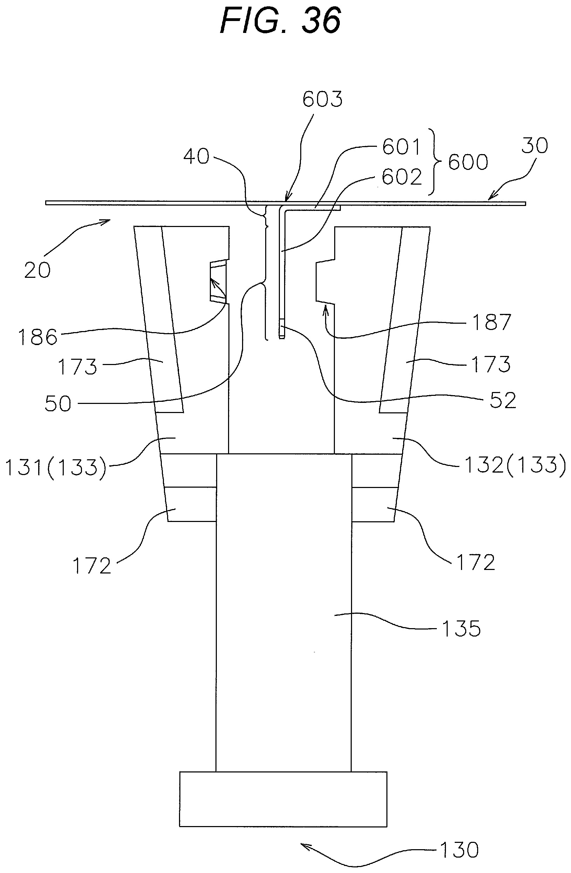

In the third embodiment, the case where the insert member 20 includes the main body portion 30 and the connector 200, and the embedded portion 40 and the exposed portion 50 are provided in the connector 200 has been described. However, the member including the embedded portion 40 and the exposed portion 50 may be a plate-shaped connection terminal 600 shown in Figs. 36, 37, 38, and 39A (sixth embodiment). The connection terminal 600 shown in Figs. 36 to 39A is, for example, a terminal formed by bending a metal plate. Examples of the metal as the material of the plate include copper, brass, phosphor bronze, iron, and stainless steel. The connection terminal 600 has a connection portion 601 and a standing portion 602 intersecting each other with a bent portion 603 interposed therebetween. Although Fig. 36 shows the connection terminal 600 bent at a right angle, the bending angle may be an obtuse angle or an acute angle.

When the main body portion 30 is the film substrate having the electric circuit, the connection portion 601 of the connection terminal 600 is a portion to be connected to the electric circuit. The connection portion 601 is fixed to the main body portion 30. For example, the connection portion 601 is fixed to the main body portion 30 with solder, and is electrically connected thereto. The standing portion 602 of the connection terminal 600 is a portion for connection to, for example, an electric device outside the film substrate. The standing portion 602 stands in a direction intersecting the surface of the main body portion 30 to which the connection portion 601 is fixed. In the connection terminal 600 shown in Fig. 36, the connection portion 601 and the standing portion 602 are orthogonal to each other. The direction in which the standing portion 602 extends coincides with, for example, the sliding direction of the sliding pin 130.

In the connection terminal 600 of the sixth embodiment, part of the connection portion 601 and the standing portion 602 is the embedded portion 40, and the other part of the standing portion 602 is the exposed portion 50. In the sixth embodiment, the exposed portion 50 is provided in the connection terminal 600.

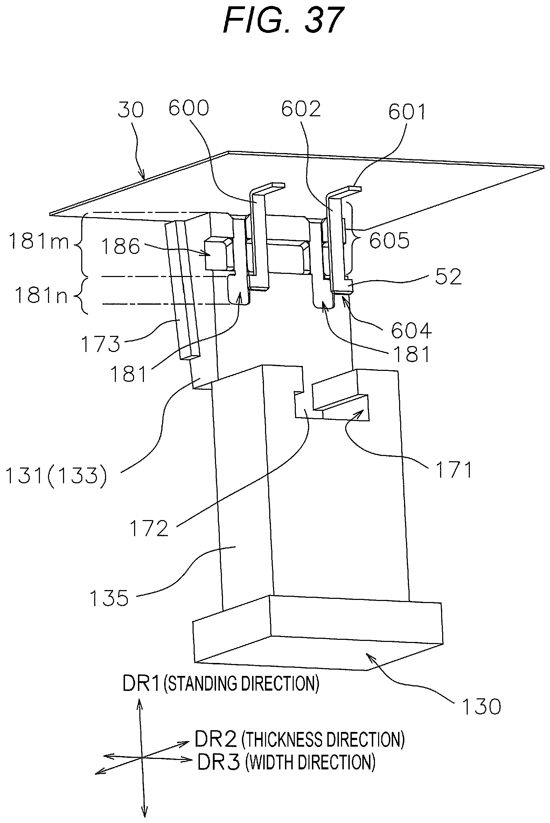

The protrusion 52 is provided at a distal end portion 604 of the standing portion 602 (see Fig. 37). The protrusion 52 is a portion protruding in a width direction (direction DR3) from a main portion 605 of the standing portion 602. The main portion 605 is a portion of the standing portion 602 other than a portion where the protrusion 52 is provided, and part of the main portion 605 is provided in the embedded portion 40 and the other part of the main portion 605 is provided in the exposed portion 50. Here, the width direction (direction DR3) is a direction orthogonal to the thickness direction (direction DR2) of the standing portion 602, and is a direction orthogonal to the standing direction (direction DR1) from the bent portion 603 toward the distal end portion 604.

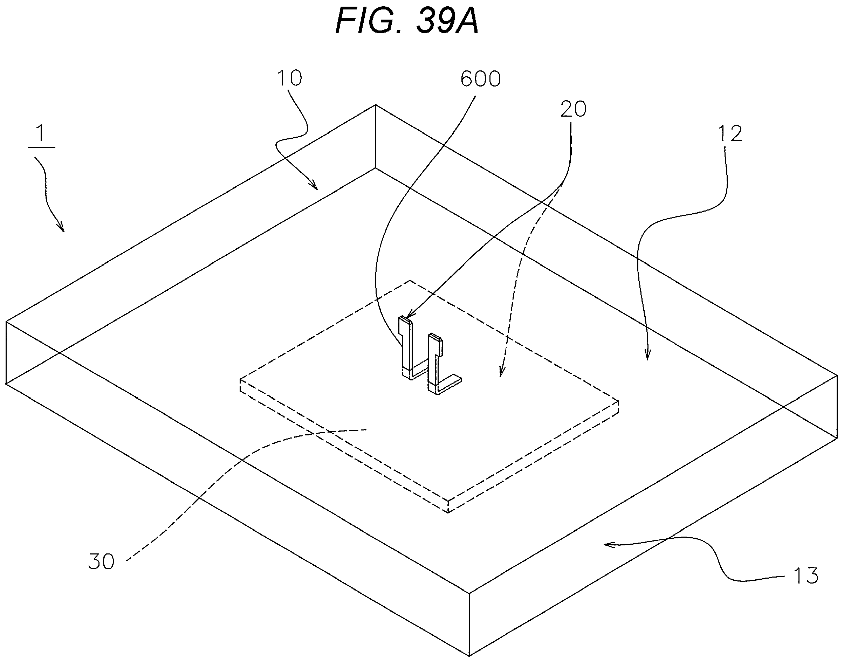

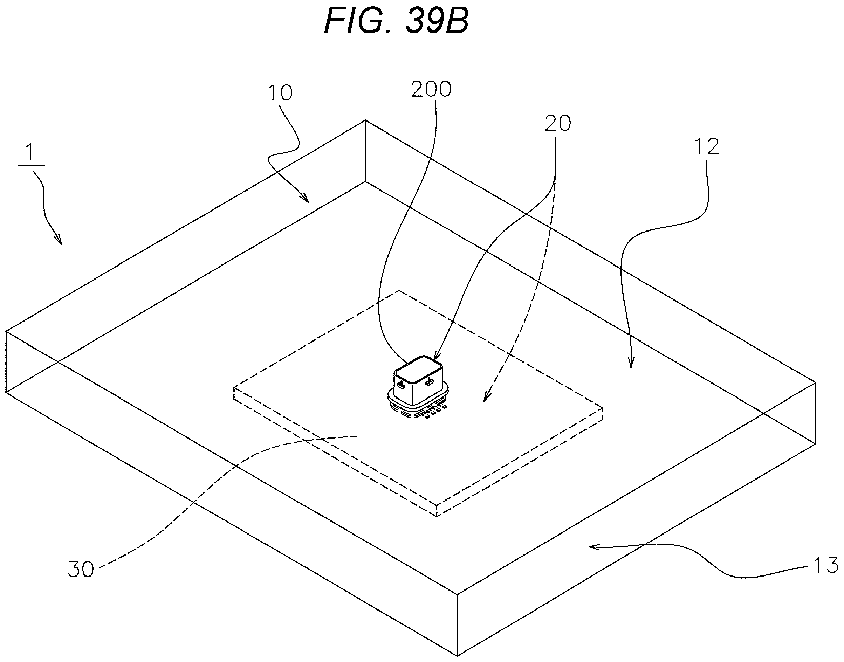

In the sixth embodiment, the resin molded article 1 having the connection terminal 600 shown in Fig. 39A can be manufactured with a mold similar to the mold 100 of the first embodiment including the sliding pin 130. For comparison, Fig. 39B shows the resin molded article 1 including the connector 200 according to the third embodiment. As shown in Figs. 1, 39A, and 39B, the resin molded article 1 of the sixth embodiment includes the resin molded body 10 and the insert member 20 as in the resin molded articles 1 of the first embodiment and the third embodiment. In the sixth embodiment, for the sake of simplicity in the description, the configuration of the insert member 20 different in shape from the resin molded articles 1 of the first embodiment and the third embodiment has been mainly described. For the resin molded articles 1 according to the first embodiment, the third embodiment, and the sixth embodiment, the description of the same components denoted by the same reference numerals has been partially omitted in order to avoid repetition of the same description.

Similarly to the mold 100 of the first embodiment, the mold of the sixth embodiment may include the first mold 110, the second mold 120, the sliding pin 130, and the ejector pin 140 (see Fig. 4). Further, the mold of the sixth embodiment may include the ejector plate 150 and the cylinder 160. In the sixth embodiment, for the sake of simplicity in the description, the configuration of the sliding pin 130 different in shape from the sliding pin 130 of the mold 100 of the first embodiment will be mainly described. For the sliding pins 130 according to the first embodiment and the sixth embodiment, the description of the same components denoted by the same reference numerals will be partially omitted in order to avoid repetition of the same description.

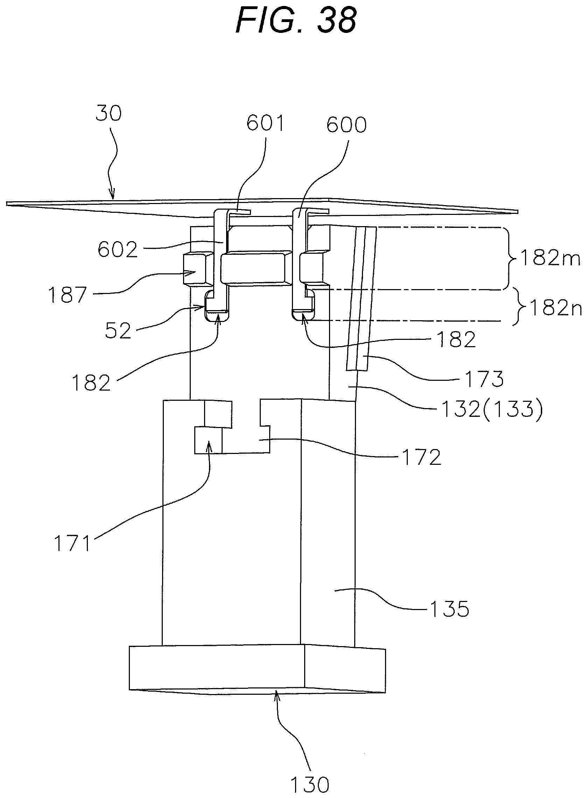

In the sixth embodiment, the housing portion 133 housing the exposed portion 50 includes the divided pieces 131, 132 as in the first embodiment. The recess 181, 182 is formed in each of the divided pieces 131, 132. Since the shape of the exposed portion 50 of the first embodiment is different from the shape of the exposed portion 50 of the sixth embodiment, the shape of the recesses 181, 182 of the first embodiment is different from the shape of the recesses 181, 182 of the sixth embodiment. The shape of the recess 181, 182 of the sixth embodiment is a shape including a normal width portion 181m, 182m corresponding to the main portion 605 and a wide portion 181n, 182n wider than the normal width portion 181m, 182m (see Figs. 37 and 38). The width of the wide portion 181n, 182n is equal to or greater than the width of the portion where the protrusion 52 is formed. The wide portion 181n, 182n is a portion corresponding to the dent 184 of the first embodiment.

The resin molded article 1 of the sixth embodiment can be manufactured by applying the same manufacturing method as the method for manufacturing the resin molded article 1 according to the first embodiment. Since the protrusion 52 is provided, the connection terminal 600 cannot be pulled out of a hole formed by combining the normal width portions 181m, 182m in a state in which the divided pieces 131, 132 are combined. However, as described in the first embodiment, the sliders 172 of the divided pieces 131, 132 slide in the T-grooves 171 of the sliding portion 135 and the divided pieces 131, 132 are separated from each other, so that the connection terminal 600 can be taken out of the recesses 181, 182.

Note that in the divided pieces 131, 132 of the sixth embodiment, a fitting groove 186 is provided in the divided piece 131 and a fitting protrusion 187 is provided on the divided piece 132 in order to reduce relative positional displacement when the divided pieces 131, 132 are combined. Since the fitting protrusion 187 is fitted in and contacts the fitting groove 186, it is possible to reduce positional displacement when the divided pieces 131, 132 are combined.

### (12) Modification F

In the sixth embodiment, the case where the protrusion 52 is disposed at the distal end portion 604 of the connection terminal 600 has been described. However, the location where the protrusion 52 is disposed may be a location at the exposed portion 50 other than the distal end portion 604. For example, the protrusion 52 may be disposed in the middle of the exposed portion 50 at the standing portion 602. Although the case where one protrusion 52 is provided on one side of one standing portion 602 has been described, the protrusion 52 may be provided on each side of one standing portion 602. In the sixth embodiment, the case where the width of the protrusion 52 protruding from the main portion 605 is constant at any location has been described. However, the shape of the protrusion 52 may be a shape having a different protrusion width depending on the location of the protrusion 52, such as a sine curve.

In the sixth embodiment, the case where the protrusion 52 protrudes in the width direction of the plate-shaped connection terminal 600 has been described. However, although not shown, the protrusion may protrude in the thickness direction of the plate-shaped connection terminal 600. For example, the protrusion can be formed by bending the distal end portion 604 of the plate-shaped connection terminal 600.

### (13) Modification G

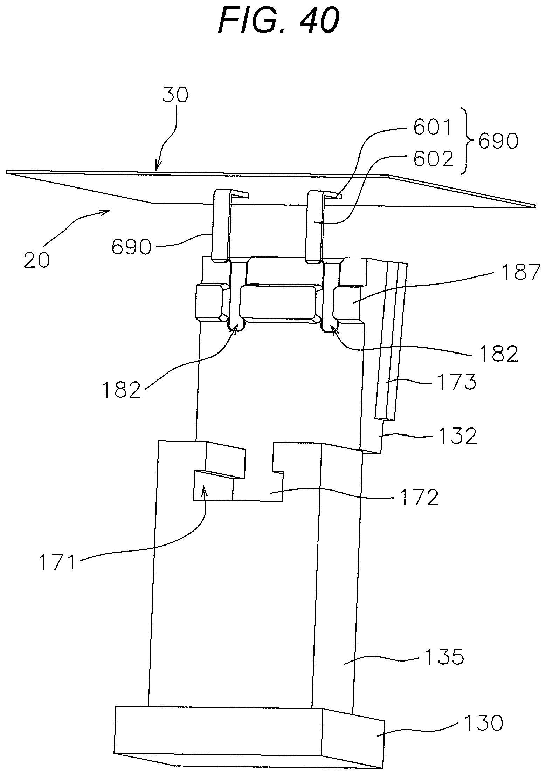

In the sixth embodiment, the case where the resin molded article 1 is formed using the connection terminal 600 having the protrusion 52 has been described. However, a mold having similar technical features and a manufacturing method having similar technical features can be applied to a resin molded article using a connection terminal 690 having no protrusion 52 as shown in Fig. 40 and a method for manufacturing such a resin molded article. The connection terminal 690 shown in Fig. 40 is the same as the connection terminal 600 shown in Fig. 37 in that the connection terminal 690 has the connection portion 601 and the standing portion 602. However, the standing portion 602 in Fig. 40 has a constant width, and does not have the protrusion 52.

Therefore, the divided pieces 131, 132 of the sliding pin 130 in Fig. 40 do not have the wide portions 181n, 182n shown in Figs. 37 and 38 in order to house the exposed portion 50 of the connection terminal 690 having no protrusion 52.

### <Seventh Embodiment>

### (14) Overall Configuration

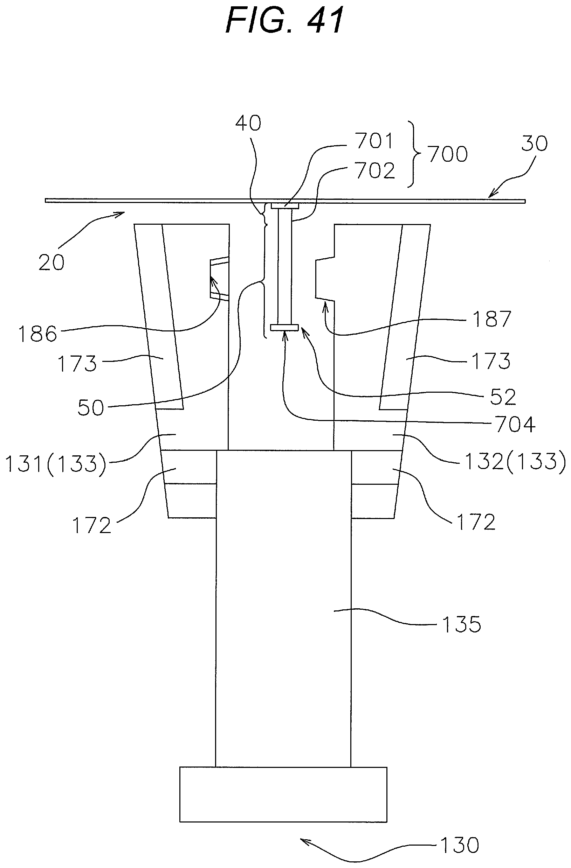

In the sixth embodiment, the case where the connection terminal 600 is formed by bending, for example, the metal plate has been described. However, as shown in Figs. 41 to 44, the shape of a connection terminal 700 may be, for example, a pin shape having the protrusion 52. The connection terminal 700 is made of metal, for example. Examples of the material of the metal connection terminal 700 include copper, brass, phosphor bronze, iron, and stainless steel. The connection terminal 700 of a seventh embodiment shown in Figs. 41 to 44 has a disk-shaped connection portion 701 and a standing portion 702. A distal end portion 704 of the standing portion 702 is processed into a disk shape, and is formed with the protrusion 52. A portion of the standing portion 702 other than the disk-shaped distal end portion 704 is a columnar main portion 705. The embedded portion 40 includes the disk-shaped connection portion 701 and part of the columnar main portion 705, and the exposed portion 50 includes the other part of the columnar main portion 705. The protrusion 52 is included in the exposed portion 50.

When the main body portion 30 is the film substrate having the electric circuit, the connection portion 701 of the connection terminal 700 is a portion to be connected to the electric circuit. The connection portion 701 is fixed to the main body portion 30. For example, the connection portion 701 is fixed to the main body portion 30 with solder, and is electrically connected thereto. The standing portion 702 of the connection terminal 700 is a portion for connection to, for example, an electric device outside the film substrate. The standing portion 702 stands in a direction intersecting the surface of the main body portion 30 to which the connection portion 701 is fixed. The connection terminal 700 shown in Fig. 41 is disposed such that the center axes of the disk-shaped connection portion 701 and the columnar main portion 705 coincide with each other. The direction in which the standing portion 702 extends coincides with, for example, the sliding direction of the sliding pin 130.

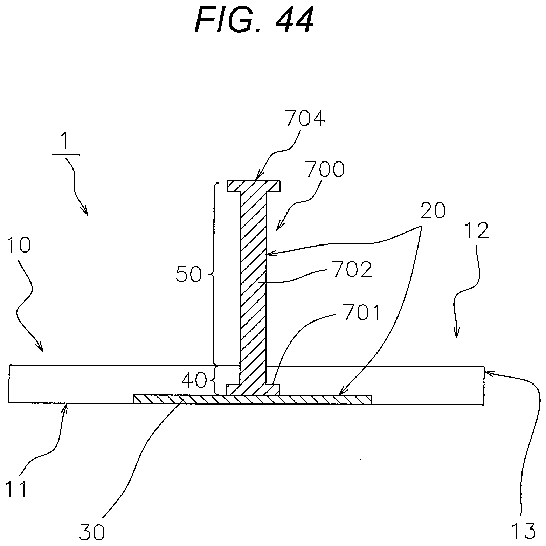

In the seventh embodiment, the resin molded article 1 having the connection terminal 700 shown in Fig. 44 can be manufactured with a mold similar to the mold 100 of the first embodiment including the sliding pin 130. As shown in Figs. 1 and 44, the resin molded article 1 of the seventh embodiment includes the resin molded body 10 and the insert member 20 as in the resin molded article 1 of the first embodiment. In the seventh embodiment, for the sake of simplicity in the description, the configuration of the insert member 20 different in shape from that of the resin molded article 1 of the first embodiment has been mainly described. For the resin molded articles 1 according to the first embodiment and the seventh embodiment, the description of the same components denoted by the same reference numerals has been partially omitted in order to avoid repetition of the same description.

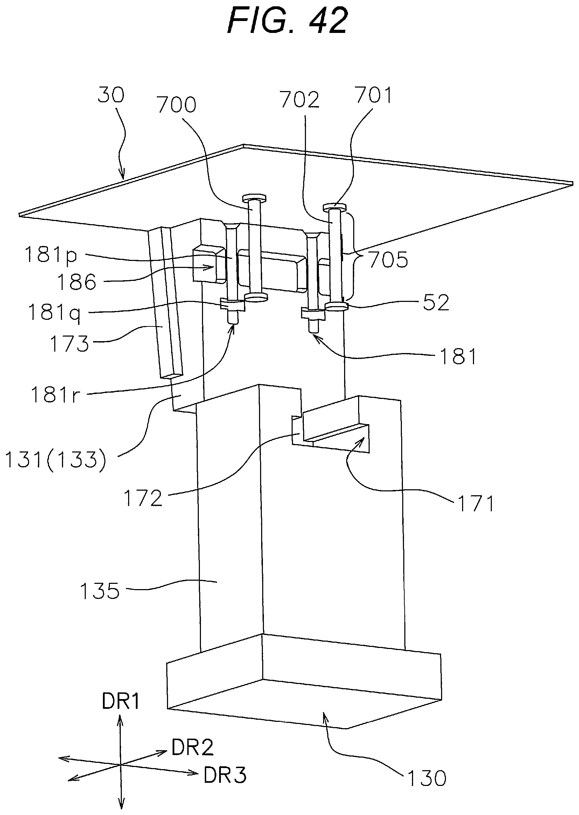

In addition, the direction DR1 shown in Fig. 42 is the standing direction of the standing portion 702, and is a direction in which the center axis of the standing portion 702 extends. The directions DR2, DR3 are the radial directions of the standing portion 702. The direction DR2 is the movement direction of the divided pieces 131, 132, and the direction DR3 is a direction orthogonal to the direction DR2.

Similarly to the mold 100 of the first embodiment, the mold of the seventh embodiment may include the first mold 110, the second mold 120, the sliding pin 130, and the ejector pin 140 (see Fig. 4). Further, the mold of the seventh embodiment may include the ejector plate 150 and the cylinder 160. In the seventh embodiment, for the sake of simplicity in the description, the configuration of the sliding pin 130 different in shape from the sliding pin 130 of the mold 100 of the first embodiment will be mainly described. For the sliding pins 130 according to the first embodiment and the seventh embodiment, the description of the same components denoted by the same reference numerals will be partially omitted in order to avoid repetition of the same description.

In the seventh embodiment, the housing portion 133 housing the exposed portion 50 includes the divided pieces 131, 132 as in the first embodiment. The recess 181, 182 is formed in each of the divided pieces 131, 132. Since the shape of the exposed portion 50 of the first embodiment is different from the shape of the exposed portion 50 of the seventh embodiment, the shape of the recesses 181, 182 of the first embodiment is different from the shape of the recesses 181, 182 of the seventh embodiment. The shape of the recess 181, 182 of the seventh embodiment is a shape including a semi-columnar first portion 181p, 182p corresponding to the main portion 705 and a second portion 181q, 182q having a shape obtained by dividing a disk having a diameter greater than that of the semi-columnar first portion 181p, 182p into half by a plane passing through the center axis. The radius of the second portion 181q, 182q is equal to or greater than the radius of the disk-shaped distal end portion 704. The second portion 181q, 182q is a portion corresponding to the dent 184 of the first embodiment. Note that in the seventh embodiment, the recess 181, 182 is provided with a third portion 181r, 182r into which the connection terminal 700 does not enter, but the third portion 181r, 182r is not necessarily provided.

The resin molded article 1 of the seventh embodiment can be manufactured by applying the same manufacturing method as the method for manufacturing the resin molded article 1 according to the first embodiment. Since the protrusion 52 is provided, the connection terminal 700 cannot be pulled out of a hole formed by combining the first portions 181p, 182p in a state in which the divided pieces 131, 132 are combined. However, as described in the first embodiment, the sliders 172 of the divided pieces 131, 132 slide in the T-grooves 171 of the sliding portion 135 and the divided pieces 131, 132 are separated from each other, so that the connection terminal 700 can be taken out of the recesses 181, 182.

Note that the divided piece 131, 132 of the seventh embodiment is also provided with the fitting groove 186 and the fitting protrusion 187 similar to those of the sixth embodiment.

### (15) Modification H

In the seventh embodiment, the case where the protrusion 52 is disposed at the distal end portion 704 of the connection terminal 700 has been described. However, the location where the protrusion 52 is disposed may be a location at the exposed portion 50 other than the distal end portion 704. For example, the protrusion 52 may be disposed in the middle of the exposed portion 50 at the standing portion 702. In the seventh embodiment, the case where the radius of the protrusion 52 is constant at any location has been described. However, the shape of the exposed portion 50 with the protrusion 52 may be, for example, a barrel shape gradually expanding toward a center portion.

### (16) Modification I

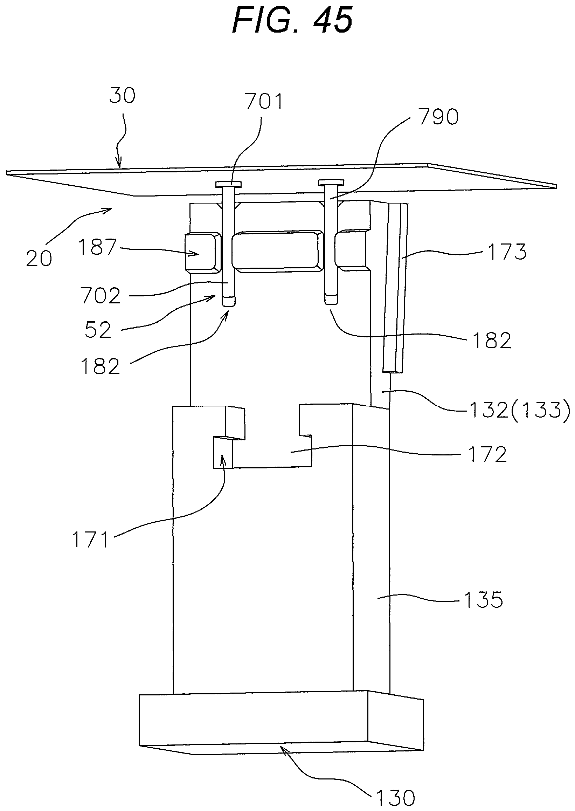

In the seventh embodiment, the case where the resin molded article 1 is formed using the connection terminal 700 having the protrusion 52 has been described. However, a mold having similar technical features and a manufacturing method having similar technical features can be applied to a resin molded article using a connection terminal 790 having no protrusion 52 as shown in Fig. 45 and a method for manufacturing such a resin molded article. The connection terminal 790 shown in Fig. 45 is the same as the connection terminal 700 shown in Fig. 41 in that the connection terminal 790 has the connection portion 701 and the standing portion 702. However, the standing portion 702 in Fig. 44 has a cylindrical shape with a constant radius, and does not have the protrusion 52.

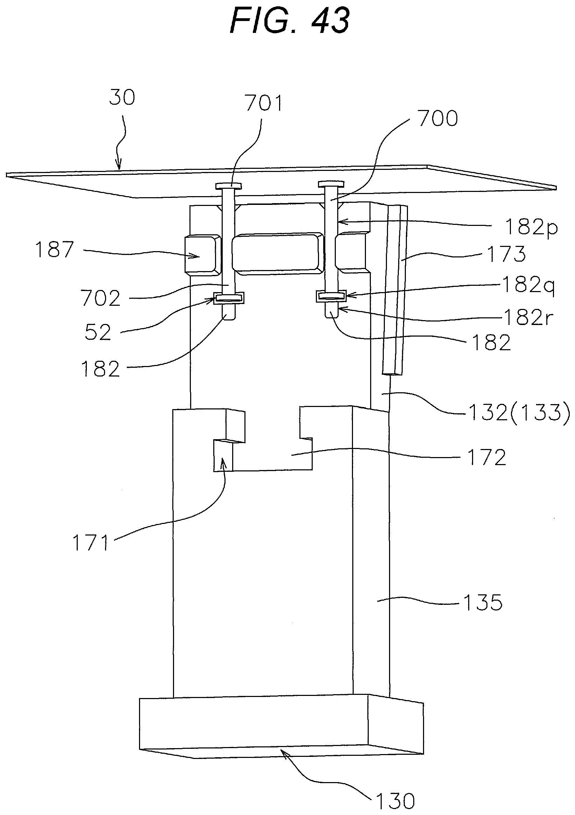

Therefore, the divided pieces 131, 132 of the sliding pin 130 in Fig. 44 do not have the second portions 181q, 182q shown in Figs. 42 and 43 in order to house the exposed portion 50 of the connection terminal 790 having no protrusion 52.

Although the first to seventh embodiments of the present invention have been described above, the present invention is not limited to the above-described embodiments and various changes can be made without departing from the gist of the invention. In particular, the plurality of embodiments and modifications described in the present specification can be arbitrarily combined as necessary.

### LIST OF REFERENCE SIGNS

1 Resin molded article
10 Resin molded body
20 Insert member
30 Main body portion
40 Embedded portion
50 Exposed portion
52 Protrusion
100 Mold
110 First mold
118 First surface
120 Second mold
128 Second surface
130 Sliding pin
131, 132, 231 to 234 Divided piece
133, 333 Housing portion
135, 235, 335 Sliding portion
138 Third surface
181, 182, 281, 282, 283, 284 Recess
181n, 182n Wide portion
181q, 182q Second portion
184, 285 Dent
SP Molding space

## Claims

1. A method for manufacturing a resin molded article, the resin molded article being formed by integrating a resin molded body and an insert member by insert molding, the insert member having a main body portion inserted into the resin molded body, an embedded portion protruding from the main body portion and embedded in the resin molded body, and an exposed portion extending from the embedded portion and exposed to an outside of the resin molded body, the method comprising:
a first step of setting the insert member between a first mold and a second mold;
a second step of forming a molding space housing the insert member by clamping the first mold and the second mold;
a third step of molding the resin molded body into which the insert member is inserted by injecting molten resin into the molding space and solidifying the molten resin; and
a fourth step of taking out the resin molded body by opening the first mold and the second mold,
wherein a wall surface of the molding space includes a first surface of the first mold and a second surface of the second mold,
in the second step, a sliding pin is slid in synchronization with the clamping of the first mold and the second mold, is changed so as to wrap the exposed portion with the embedded portion of the insert member exposed to the molding space, and forms a third surface of the wall surface of the molding space at a boundary between the embedded portion and the exposed portion,
in the third step, the embedded portion is located in the molten resin, and the molten resin is injected until the molten resin comes into contact with the third surface and is solidified, and
in the fourth step, the sliding pin is slid and is changed so as to release the exposed portion wrapped with the sliding pin.

2. The method for manufacturing the resin molded article according to claim 1, wherein
in the second step, the exposed portion is housed in a housing portion of the sliding pin in an open state in synchronization with the clamping, and the housing portion is deformed into a closed state to wrap the exposed portion and form the third surface,
in the third step, the molten resin does not flow into the housing portion, and
in the fourth step, the housing portion in the closed state is deformed into the open state to take out the exposed portion from the housing portion.

3. The method for manufacturing the resin molded article according to claim 2, wherein
the housing portion of the sliding pin includes a plurality of divided pieces, and
the plurality of divided pieces is deformed into the closed state by sliding and being combined when the exposed portion is housed in the housing portion in the second step, and is deformed into the open state by being separated when the exposed portion is taken out of the housing portion in the fourth step.

4. The method for manufacturing the resin molded article according to claim 3, wherein
the plurality of divided pieces slides in a direction away from the resin molded body when separated.

5. The method for manufacturing the resin molded article according to any one of claims 2 to 4, wherein
the exposed portion has, on an outer peripheral surface thereof, a dam portion protruding in an annular shape to dam the molten resin, and
the housing portion has an annular groove in which the exposed portion is movable in a direction intersecting a sliding direction and which is annularly contactable with the dam portion.

6. A resin molded article comprising: a resin molded body made of thermoplastic resin; and
an insert member inserted into the resin molded body by insert molding, wherein
the insert member includes
a main body portion inserted into the resin molded body,
an embedded portion protruding from the main body portion and embedded in the resin molded body, and
an exposed portion extending from the embedded portion and exposed to an outside of the resin molded body, and
the exposed portion includes an outer peripheral surface exposed from the resin molded body and a protrusion protruding from the outer peripheral surface.

7. The resin molded article according to claim 6, wherein
the exposed portion has, on the outer peripheral surface, a dam portion protruding in an annular shape and contacting the resin molded body.

8. The resin molded article according to claim 6 or 7, wherein
the main body portion includes a film substrate having an electric circuit, and
the exposed portion is included in a connector or a connection terminal electrically connected to the electric circuit.

9. A mold for insert molding for manufacturing a resin molded article, the resin molded article being formed by integrating a resin molded body and an insert member by insert molding, the insert member having a main body portion inserted in the resin molded body, an embedded portion protruding from the main body portion and embedded in the resin molded body, and an exposed portion extending from the embedded portion and exposed to an outside of the resin molded body, the mold comprising:
a first mold having a first surface and a second mold having a second surface for forming a wall surface of a molding space for molding the resin molded body; and
a sliding pin having a third surface for forming the wall surface of the molding space, wherein
the sliding pin has a housing portion housing the exposed portion, and
the housing portion changes from an open state to a closed state upon clamping to house the exposed portion and changes from the closed state to the open state upon mold opening to take out the exposed portion.
